# EUROPEAN PATENT APPLICATION

(11) **EP 3 975 078 A1**
(43) Date of publication of application: **30.03.2022**
(21) Application number: 21197179.1
(22) Date of filing: 16.09.2021
(51) Int. Cl.: G06Q 10/00, G06Q 50/00, G06Q 50/30

(54) **EXPERIENCE ACQUISITION SUPPORT APPARATUS**

(30) Priority: 28.09.2020 JP 2020162049
(71) Applicant: MAZDA MOTOR CORPORATION, Hiroshima 730-8670 (JP)
(72) Inventor: Ito, Seiichi, Hiroshima, 730-8670 (JP); Okamura, Masashi, Hiroshima, 730-8670 (JP); Maeda, Takashi, Hiroshima, 730-8670 (JP)
(74) Representative: Behr, Wolfgang

(57) **Abstract**

[Task] To provide an experience acquisition support apparatus capable of promoting breadth of experiences through a moving body.

[Solution] A management device 30 as the experience acquisition support apparatus that supports acquisition of an experience through a vehicle 1 sets a destination and a travel route of the vehicle 1 to be suggested to a user A. Then, while the user A is active in a trip state where the destination and the travel route are set in the vehicle 1, the management device 30 notifies a mobile terminal 20 of the user A of existence of another user B and sends information on the other user B to the mobile terminal 20 of the user A such that the user A can interact with the other user B when detecting a mobile terminal 20B that is owned by the other user B who is active in the trip state and that exists within a specified range around the mobile terminal 20 of the user A. Then, the management device 30 generates a video file, which can be browsed by the other user B and the like, from videos captured by cameras 11a, 11b of the vehicle 1 in the trip state.

## Description

### [Technical Field]

The present invention relates to an experience acquisition support apparatus that supports acquisition of an experience through a moving body.

### [Background Art]

Various experiences can be acquired through a moving body such as a vehicle. Accordingly, it is beneficial to support the acquisition of such an experience through the moving body from a perspective of urging a user to go outside by the moving body. A technique related thereto is disclosed in JP 2016-192051 A, for example. JP 2016-192051 A discloses a technique of promoting users to go outside for regional revitalization by using a regional traffic system to distribute information acquired by one of the users as information suited to taste of another user in extensive and timely manners.

### [Summary of the Invention]

### [Problem to be solved by the invention]

By the way, the present inventors found that there were two types of patterns in a way the user enjoys a certain "product". The first pattern is a pattern in which the user is repeatedly self-trained to acquire knowledge, skills, and the like of the "product", thereby receives action (that is, a stimulus) from the "product", and achieves personal growth (hereinafter referred to as an "α cycle"). The second pattern is a pattern in which the user is involved with a "person" through the "product", has an interaction with the "person" via communication, and thereby enjoys a group activity (hereinafter referred to as a "β cycle"). Here, in the present specification, the "product" is a concept that includes existing objects (for example, a camera, a vehicle, a building, scenery, and the like) and non-existing objects (for example, a sport, a movie, and the like), and is further a concept that includes existence of objects other than the "person".

The α cycle is such a cycle that the user enjoys individually while the personal growth of the user is significantly promoted. Accordingly, even when there is involvement with another "person", the user's activity in the α cycle tends to be an activity in a small group of persons with similar personal interests (a small group of homogenous users). Meanwhile, although not significantly promoting the personal growth of the user, the β cycle is a cycle that exerts interaction with many other users. Accordingly, the user's activity in the β cycle is not limited to the small group of similar users but is likely to be extended to an activity in a large group in which various types of the users are mixed.

When the user who has only enjoyed the activity in one of the α cycle and the β cycle tries the other activity in addition to such an activity, the user can gain new findings and pleasure. For this reason, the present inventors have come to such an idea that, by connecting and urging circulation of the α cycle and the β cycle, the user's pleasure related to a certain "product" is enriched, which further enriches quality of life. That is, the enhanced pleasure further enriches the life.

In particular, the present inventors considered to promote breadth of experiences through the moving body by providing a technical solution that gives the user action from the "product" and action from the "person", which are inherent to a drive experience by the moving body (respectively corresponding to an influence of an element other than the interaction with the person on the experience and an influence of the interaction with the person on the experience), in other words, such a technical solution that circulates the α cycle and the β cycle.

The present invention has been made to solve the above problem and therefore has a purpose of providing an experience acquisition support apparatus capable of promoting breadth of an experience through a moving body.

### [Means for solving the Problem]

In order to achieve the above purpose, the present invention is an experience acquisition support apparatus for supporting acquisition of an experience through a moving body, and the experience acquisition support apparatus is configured to: set a destination and/or a travel route of a moving body to be suggested to a user; while the user is active in a trip state where the destination and/or the travel route is set for the moving body, notify a mobile terminal of the user of existence of another user and send information on the other user to the mobile terminal of the user such that the user can interact with the other user when detecting a mobile terminal that is owned by the other user who is active in the trip state and that exists within a specified range around the mobile terminal of the user; and generate a video file that can be browsed by at least the other user from a video captured by a camera in the moving body in the trip state.

According to the present invention that is configured as described above, first, the destination and/or the travel route is suggested to the user. In this way, as action from a "product" (corresponding to an α cycle), the user can fulfill curiosity, a desire for growth, and the like. In addition, according to the present invention, the other user views the video that is captured during movement of the moving body. In this way, as action from a "person" (corresponding to a β cycle), the user can fulfill self-esteem needs by sharing the video, and the like. Meanwhile, according to the present invention, the user is notified of the existence of the other user and the information on the other user such that the user can interact with the other user B who is located nearby. Thus, it is possible to promote an interaction between the users who have various behavioral principles.

Thus, according to the present invention, it is possible to promote the interaction between the users who have the various behavioral principles while providing the user with both of the action from the "product" and the action from the "person" through a drive by the movable body. As a result, it is possible to foster two types of the behavioral principles of the user that are pursuit of the action from the "product" and pursuit of the action from the "person" and to promote breadth of experiences through the moving body. The present invention thereby provides a technical solution that allow an improved user experience in of the moving body.

In the present invention, preferably, it is configured to, per specified period, extract plural still images from the video and generate printing data for creating an album that includes the plural still images.

According to the present invention that is configured as described above, it is possible to create the album from the video captured in the moving body and to fix a past drive experience to a non-electronic medium. As a result, it is possible for the user to memorize the experiences that are acquired through the moving body and to promote formation of the behavioral principle and a value through the moving body.

In the present invention, preferably, the experience acquisition support apparatus is configured to refer to an album creation date and time information that is stored in a content database in a browsing information database of the experience acquisition support apparatus.

In the present invention, preferably, the experience acquisition support apparatus is configured to determine whether current timing is timing to create the album, in particular determine whether the specified period has elapsed from the date and time.

In the present invention, preferably, it is configured to set the destination and/or the travel route on the basis of a first evaluation value, which is acquired by evaluating each of plural points and plural sections in map data from a perspective of an influence of an element other than the interaction with the person on the experience, and a second evaluation value, which is acquired by evaluating each of the plural points and the plural sections from a perspective of an influence of the interaction with the person on the experience.

According to the present invention that is configured as described above, the destination and/or the travel route is set on the basis of the first and second evaluation values for each of the point and the section. Thus, it is possible to suggest such a destination and/or such a travel route that can provide the user with both of the action from the "product" and the action from the "person" that are inherent to the drive experience. That is, in a proposal of the destination or the travel route itself, the action from the "product" is high. However, since the destination or the travel route is set in consideration of the point and the section, each of which is evaluated from the perspective of the action from the "person" (corresponding to the second evaluation value), it is possible to also adequately provide the user with the action from the "person".

In the present invention, preferably, it is configured to set the destination and/or the travel route suited to the user on the basis of, in addition to the first and second evaluation values of each of the point and the section, a third evaluation value of the user, which is acquired by evaluating likeliness of receiving the influence of the element other than the interaction with the person on the experience, and a fourth evaluation value of the user, which is acquired by evaluating likeliness of receiving the influence of the interaction with the person on the experience.

According to the present invention that is configured as described above, it is possible to set the destination or the travel route that corresponds to a characteristic of the user related to the likeliness of receiving the action from the "product" and the action from the "person".

In the present invention, preferably, it is configured to set the first and second evaluation values of each of the point and the section on the basis of positional information of the moving body, driving state information indicative of a driving state of the moving body by a driver, and emotional state-related information that is related to an emotional state of the driver and/or a passenger of the moving body, which are acquired from each of plural moving bodies.

According to the present invention that is configured as described above, it is possible to adequately set the first and second evaluation values of each of the points and each of the sections.

In the present invention, preferably, the experience acquisition support apparatus is configured to, for a user whose third evaluation value is higher than the fourth evaluation value, set a travel route that includes a point or a section with a relatively high second evaluation value, in particular a point or a section, for which a higher second evaluation value than the fourth evaluation value of the user is set; and for a user whose fourth evaluation value is higher than the third evaluation value, set a travel route that includes a point or a section with a relatively high first evaluation value, in particular a point or a section, for which a higher first evaluation value than the third evaluation value of the user is set.

In the present invention, preferably, it is configured to generate, as the video file, a highlight video including: a highlight portion that is identified from the video on the basis of a first degree of action (corresponding to the action from the "product" (the α cycle)) indicating the influence of the element other than the interaction with the person on the experience of the user; and a highlight portion that is identified from the video on the basis of a second degree of action (corresponding to the action from the "person" (the β cycle)) indicating the influence of the interaction with the person on the experience of the user.

According to the present invention that is configured as described above, in regard to sharing of the video file with the other user itself, the action from the "person" is high. However, by sharing the video file including the highlight portion that is extracted from the perspective of the action from the "product", it is also possible to adequately provide the user with the action from the "product".

In the present invention, preferably, the experience acquisition support apparatus is configured to, for each of the highlight portions, randomly extract a single still image from the plural still images that constitutes respective one of the highlight portions.

In the present invention, preferably, it is configured to, in the highlight video, extract plural still images from each of the highlight portion that is identified on the basis of the first degree of action and the highlight portion that is identified on the basis of the second degree of action, and to generate printing data for creating an album that includes the plural still images.

Also, according to the present invention that is configured as described above, by creating the album from the video captured in the moving body and fixing the past drive experience to the non-electronic medium, the user can memorize the experiences that are acquired through the moving body. In particular, according to the present invention, the user can memorize the experiences corresponding to both of the action from the "product" and the action from the "person" that are inherent to the drive experience by the moving body. As a result, it is possible to effectively foster the two types of the behavioral principles of the user that are the pursuit of the action from the "product" and the pursuit of the action from the "person".

In the present invention, preferably, the camera in the moving body includes plural cameras for capturing videos of the outside and the inside of the moving body, and it is configured to: determine the first and second degrees of action on the basis of the driving state information indicative of the driving state of the moving body by the driver and the emotional state-related information related to the emotional state of the driver and/or the passenger of the moving body, which are acquired during the movement of the moving body; and identify the highlight portion from videos that are captured by the plural cameras on the basis of each of the determined first and second degrees of action.

According to the present invention that is configured as described above, it is possible to adequately identify the highlight portions that are related to the action from the "product" and the action from the "person" from the videos captured by the plural cameras.

In the present invention, preferably, it is configured to: as information on the other user, send profile information of the other user to be shown on the mobile terminal of the user to the mobile terminal of the user such that the user can interact with the other user.

According to the present invention that is configured as described above, the user can know the further detailed information on the other user, can thereby prepare topics for conversation with the other user, and can further foster willingness to become friends with the other user.

In the present invention, preferably, it is configured to send a notification signal, which is used to notify of approach of the mobile terminal of the other user, to the mobile terminal of the user according to a distance between the mobile terminal of the user and the mobile terminal of the other user such that the user can interact with the other user.

According to the present invention that is configured as described above, the user can meet the other user in a real space with assistance of the notification by the mobile terminal.

In the present invention, preferably, the experience acquisition support apparatus is configured to, in the case where the mobile terminal of the other user who is active in an on-state of a trip mode exists within a specified second range, in particular within 500 m, around the mobile terminal of the user, cause the mobile terminal of the user to show the existence of the other user.

In the present invention, preferably, the experience acquisition support apparatus is configured to execute user list display processing to cause the mobile terminal of the user to show a simple profile information of the other user.

In the present invention, preferably, the experience acquisition support apparatus is configured to, in the case where the mobile terminal of the other user who is active in an on-state of a trip mode exists within a specified third range, in particular within 10 to 50 m, around the mobile terminal of the user, cause the mobile terminal of the user to show the existence of the other user, in particular notify of approach of the other user, so that the user can approach the other user.

In the present invention, preferably, the experience acquisition support apparatus is configured to execute interaction promotion processing to cause the mobile terminal of the user to show detailed profile information of the other user.

According to another aspect of the present invention, an experience acquisition support system is provided which includes an experience acquisition support apparatus according to any of claims 1 to 14 and a moving body.

In the present invention, preferably, the moving body is a vehicle.

In the present invention, preferably, the moving body is a car, a bus, a motorcycle, a scooter, a watercraft, or an aircraft.

### [Advantage of the invention]

The experience acquisition support apparatus of the present invention can promote breadth of the experiences through the moving body by providing technical means to support the user.

### [Brief Description of the Drawings]

[Fig. 1] Fig. 1 is a configuration diagram of an experience acquisition support system according to an embodiment of the present invention.
[Fig. 2] Fig. 2 illustrates a processing flow of experience acquisition support processing according to the embodiment of the present invention.
[Fig. 3] Fig. 3 includes explanatory views of a questionnaire that is used to set an α evaluation value and a β evaluation value of a user in the embodiment of the present invention.
[Fig. 4] Fig. 4 is an explanatory table of a method for setting the α evaluation value and the β evaluation value of the user on the basis of the questionnaire according to the embodiment of the present invention.
[Fig. 5] Fig. 5 is an explanatory table of a method for setting the α evaluation value and the β evaluation value of a point according to the embodiment of the present invention.
[Fig. 6] Fig. 6 is an explanatory view in which candidates of points and sections used to set a travel route are shown on a map in the embodiment of the present invention.
[Fig. 7] Fig. 7 illustrates a display screen example of the travel route and a heat map set in the embodiment of the present invention.
[Fig. 8] Fig. 8 illustrates a processing flow of travel route setting processing according to the embodiment of the present invention.
[Fig. 9] Fig. 9 illustrates a processing flow of greeting processing according to the embodiment of the present invention.
[Fig. 10] Fig. 10 is an explanatory view of the greeting processing according to the embodiment of the present invention.
[Fig. 11] Fig. 11 illustrates a processing flow of encounter processing (user list display processing) according to the embodiment of the present invention.
[Fig. 12] Fig. 12 includes explanatory views of the user list display processing according to the embodiment of the present invention.
[Fig. 13] Fig. 13 illustrates a processing flow of the encounter processing (interaction promotion processing) according to the embodiment of the present invention.
[Fig. 14] Fig. 14 includes explanatory views of the interaction promotion processing according to the embodiment of the present invention.
[Fig. 15] Fig. 15 is an explanatory chart of a method for identifying highlight portions by video editing processing according to the embodiment of the present invention.
[Fig. 16] Fig. 16 is a schematic configuration view illustrating an example of each of first to fourth editing mode videos according to the embodiment of the present invention.
[Fig. 17] Fig. 17 is a schematic configuration chart illustrating an example of a fifth editing mode video according to the embodiment of the present invention.
[Fig. 18] Fig. 18 illustrates a processing flow of the video editing processing according to the embodiment of the present invention.
[Fig. 19] Fig. 19 illustrates a processing flow of album creation processing according to the embodiment of the present invention.

### [Modes for Carrying Out the Invention]

A description will hereinafter be made on an experience acquisition support apparatus according to an embodiment of the present invention with reference to the accompanying drawings.

### [System Configuration]

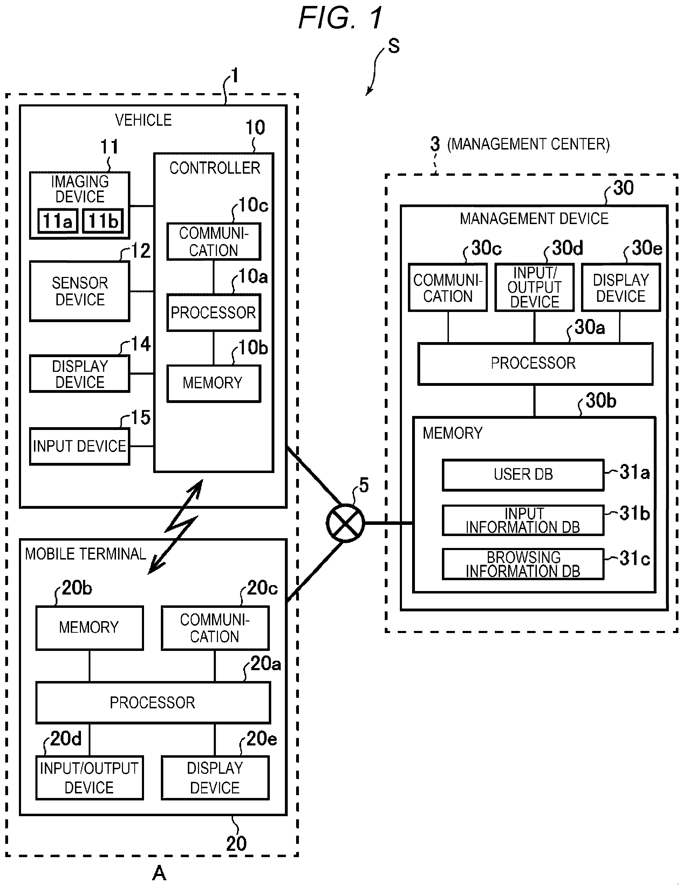

A description will firstly be made on a schematic configuration of an experience acquisition support system, to which the experience acquisition support apparatus according to the embodiment of the present invention is applied, with reference to Fig. 1. Fig. 1 is a configuration diagram of the experience acquisition support system.

An experience acquisition support system S in this embodiment is a system that supports acquisition of an experience through a vehicle 1 as a moving body. More specifically, the experience acquisition support system S sets a travel route of the vehicle 1 to be suggested to a user A, supports formation of friendships among plural users having the vehicles 1 and mobile terminals 20, and edits a video captured in the vehicle 1.

As illustrated in Fig. 1, the experience acquisition support system S in this embodiment includes: a controller 10 in the vehicle 1 owned by the user A; the mobile terminal 20 owned by the user A; and a management device (a server) 30 in a management center 3, and these are configured to be wirelessly communicable. The controller 10, the mobile terminal 20, and the management device 30 are wirelessly communicable via a communication line (an Internet line) 5. The controller 10 and the mobile terminal 20 are communicable by a near-field wireless communication technology (for example, Bluetooth^{®}). In the experience acquisition support system S, a vehicle 1B and a mobile terminal 20B, which are owned by the plural other users B (for example, B1 B2, B3) are also connected to the management device 30 wirelessly communicable. A description will hereinafter be made on the user A as a representative example of the plural users. However, the other users B similarly fit this description.

First, the controller 10 in the vehicle 1 is a computer device including a processor 10a, memory 10b, a communication circuit 10c, and the like, and is configured to execute processing when the processor 10a runs various programs stored in the memory 10b. The controller 10 is connected to an imaging device 11, a sensor device 12, a display device 14, and an input device 15 that are mounted on the vehicle 1. The processor 10a stores image data received from the imaging device 11, measurement data received from the sensor device 12, and input data received from the input device 15 in the memory 10b. In addition, the processor 10a repeatedly sends the image data, the measurement data, the input data, and processing data of these types of data to the management device 30 via the communication circuit 10c. Furthermore, the processor 10a is programmed to execute specified processing on the basis of a control signal received from the management device 30.

The imaging device 11 is a video camera and includes: an in-vehicle camera 11a that captures a video of a driver (the user A) and a passenger; and an outside camera 11b that captures a video of outside of the vehicle 1. The outside camera 11b includes plural video cameras to capture videos of front, rear, right, and left areas of the vehicle 1.

The sensor device 12 includes: a vehicle sensor that measures a vehicle state; and a biological sensor that acquires biological information of an occupant. The vehicle sensors include a positioning device for measuring a current position (positional information) of the vehicle 1 on Earth (for example, the Global Positioning System (GPS) and a gyroscope sensor are used), a vehicle speed sensor, an acceleration sensor, a steering angle sensor, a yaw rate sensor, another type of a sensor, and the like.

In this embodiment, based on output of the acceleration sensor in the sensor device 12, the controller 10 determines a driving state of the vehicle 1 by the driver, in particular, whether the driver is in a preferred driving state (hereinafter referred to as a "sleek driving state"). The sleek driving state is preferably a sleek driving state as defined in US2014/018974A1, in particular as defined in par. [0139]-[0179] of US2014/018974A1. More specifically, in the case where a change amount of acceleration of the vehicle 1 is relatively large (during a start, during a stop, during initiation of turning, during termination of turning, or the like), where the change amount of the acceleration is equal to or larger than a specified value, and where jerk (a differential value of the acceleration) is smaller than a specified value, the controller 10 determines that the driving state by the driver is the sleek driving state. In this driving state, a driving operation is performed at an appropriate speed, and each of a magnitude and a speed of sway of the occupant's body falls within a specified range. Meanwhile, in the case where the change amount of the acceleration of the vehicle 1 is relatively small (in the case where the vehicle 1 is accelerated, decelerated, or turned at the substantially constant acceleration), where the change amount of the acceleration of the vehicle 1 is smaller than the specified value, and an absolute value of the acceleration is equal to or larger than the specified value, the controller 10 determines that the driving state by the driver is the sleek driving state. In this driving state, the driving operation is performed all at once with an optimum operation amount, and such an operation state is maintained. As a result, the occupant's body is maintained stably. However, the component that makes such a determination on the driving state is not limited to only the controller 10. The management device 30 and/or the mobile terminal 20 may partially or entirely make the determination on the driving state.

The biological sensors in the sensor device 12 include: an in-vehicle microphone that picks voices of the driver and the passenger in the vehicle; a heart rate measurement device that measures heart rate variability of the driver; and the like. The controller 10 can use the in-vehicle camera 11a as the biological sensor. For example, the controller 10 can acquire facial expressions, sightline directions, blinks, and the like of the driver and the passenger from the image data captured by the in-vehicle camera 11a.

In this embodiment, the controller 10 acquires, as biological data, behavior of upper bodies including pupil diameters, eye movement, positions and directions of heads and shoulders of the driver and the passenger, the facial expressions, and the heart rate variability measured by the heart rate measurement device, and such data is acquired by analyzing the image data of the in-vehicle camera 11a. Then, based on such biological data, the controller 10 analyzes psychological states (more specifically, degrees of tension) of the driver and the passenger, and determines whether the driver and the passenger are in a mentally favorable active state. In addition, the controller 10 analyzes the voices of the driver and the passenger, which are picked by the in-vehicle microphone, by using a known algorithm such as "MIMOSYS^{®}" and acquires emotional states (more specifically, degrees of mental activity) of the driver and the passenger. In particular, based on both of the degrees of mental activity, which are acquired by analyzing the voices, and the psychological states, which are acquired by analyzing the above biological data, the controller 10 determines the emotional states of the driver and the passenger. For example, while scoring the degree of mental activity by the voice, the controller 10 adds a specified score to the score of the degree of mental activity when determining that the psychological state by the biological data is in the favorable active state. In this way, the controller 10 scores the emotional states of the driver and the passenger. Then, in the case where the thus-acquired scores are equal to or higher than a specified value, the controller 10 determines that the driver and the passenger are in the active state. However, the component that makes such a determination on the emotional state is not limited to only the controller 10. The management device 30 and/or the mobile terminal 20 may partially or entirely make the determination on the emotional state.

The display device 14 is a liquid-crystal display, for example, and can show a map, various types of traffic information, and the like. Here, the mobile terminal 20 may be used as the display device by connecting the mobile terminal 20 to the controller 10 in a wireless or wired fashion.

The input device 15 is an input device including a touch-type input screen, a switch, a button, or the like, and the driver can input various types of information by using the input device 15. The display device 14 may be used as the touch-type input screen. For example, when encountering scenery or a sightseeing spot that the driver likes during driving, the driver can input such a fact by the input device 15. In this case, an operation button used to input the fact that the driver likes the scenery or the like (hereinafter referred to as a "like button") may be provided at a position, where the driver can operate the operation button, in a cabin (in one example, provided to a steering device), or the like button may be shown on a screen of the display device 14 that is configured to be of a touch input type.

The controller 10 stores the image data of the imaging device 11, the measurement data (including a position signal, an IG state signal, and the like) of the sensor device 12, the input data of the input device 15, and the processing data in the memory 10b, and sends these types of data with a vehicle identification number, which is used to identify the vehicle 1, to the management device 30 as needed. The position signal indicates the current position of the vehicle 1. The IG state signal indicates whether an IG signal is on or off. When the IG signal is on, an engine of the vehicle 1 is actuated.

In addition, the controller 10 sends, to the management device 30, the image data corresponding to the video captured by each of the in-vehicle camera 11a and the plural outside cameras 11b, information on the sightline direction of the passenger (passenger sightline information), information on the driving state of the driver, that is, information on whether the driver is in the sleek driving state (driving state information), information on emotions of the driver and the passenger, volume (dB) of conversation among the occupants picked by the in-vehicle microphone, and operation information of the like button.

The passenger sightline information is acquired by analyzing the image data of the in-vehicle camera 11a, and is information on a direction in which the sightline direction of the passenger is oriented, more specifically, any of an in-vehicle direction, a vehicle front direction, a vehicle rear direction, a vehicle right direction, and a vehicle left direction. The conversation volume (dB) is acquired by analyzing the voices picked by the in-vehicle microphone. In the case where the conversation volume sent from the controller 10 is equal to or larger than a specified value (for example, 60 dB), the management device 30 determines that the volume of the conversation among the occupants is "large". In another example, the controller 10 may determine whether the conversation volume is "large", and may send the determination result as the conversation volume to the management device 30. The operation information of the like button is information on whether the like button is on. Here, each of the passenger sightline information, the conversation volume, and the operation information of the like button is information that indirectly indicates the emotion of the driver and/or the passenger. Information that is acquired by adding emotional information directly indicating the emotions of the driver and the passenger to these types of the information is included in the "emotional state-related information" in the present invention.

Furthermore, the controller 10 sends, to the management device 30, headcount information indicative of the number of the occupants in the vehicle 1. This number of the occupants can be calculated from an image captured by the in-vehicle camera 11a, output of a seatbelt sensor, output of a seating sensor, or the like.

By the way, when the user A uses the experience acquisition support system S via the vehicle 1, the controller 10 may authenticate the user. For example, the controller 10 may use the image data, which is captured by the camera 11a, for user authentication (image authentication). Alternatively, for the user authentication, the controller 10 may use linkage of the mobile terminal 20 as registered equipment to the controller 10 via a near-field wireless communication line. In this case, the mobile terminal 20 is registered in the controller 10 in advance. In this user authentication, it is determined by the above linkage that the legitimate user A is in the vehicle 1.

Next, the mobile terminal 20 is a mobile-type computer device that includes a processor 20a, memory 20b, a communication circuit 20c, an input/output device 20d, a display device 20e, and the like. The mobile terminal 20 is configured to execute various types of processing when the processor 20a runs various programs stored in the memory 20b. In addition, the processor 20a exchanges various types of data with the management device 30 and the controller 10 via the communication circuit 20c.

The mobile terminal 20 acquires a current position by a positioning program on the basis of communication with a near-by communication station or on the basis of satellite positioning using the GPS. The mobile terminal 20 repeatedly sends a position signal indicative of the acquired current position, a mobile terminal identification number used to identify the mobile terminal 20, and another type of data to the management device 30.

The user A can access a website by using a browser program (a browser application) in the mobile terminal 20. For example, with the mobile terminal 20, the user A can browse various types of the information by accessing a database that is provided by the management device 30.

In addition, by using various programs (various applications) in the mobile terminal 20, the user A can cause the display device 20e to show the various types of the data received from the management device 30, and can send specified data, which is input via the input/output device 20d, to the management device 30. More specifically, the display device 20e of the mobile terminal 20 shows the video that is edited by the management device 30. In this case, the user A selects a video editing mode by using the input/output device 20d of the mobile terminal 20. Then, the management device 30 edits the video in the thus-selected editing mode, sends the edited video to the mobile terminal 20, and causes the display device 20e to show the edited video.

Furthermore, the user A can set a travel route, on which the vehicle 1 travels, by using the mobile terminal 20. More specifically, the user A inputs a departure date and time, a total trip time, a departure point, an end point (home or an accommodation such as an inn), and the like by using the input/output device 20d, and the mobile terminal 20 sends the thus-input information to the management device 30. Then, based on the input information, the management device 30 sets the travel route to be suggested to the user A. The mobile terminal 20 and/or the controller 10 in the vehicle 1 shows the thus-set travel route.

By the way, when the IG of the vehicle 1 is turned on in a state where the travel route is set, the controller 10 in the vehicle 1 sets a specified mode (hereinafter referred to as a "trip mode") to be on. When the vehicle 1 arrives at the end point of the travel route and the IG of the vehicle 1 is turned off, the controller 10 sets the trip mode to be off. A state where the trip mode is on corresponds to a "trip state" in the present invention. The controller 10 in the vehicle 1 sends trip mode information indicative of on/off of such a trip mode to the management device 30. In another example, the user A may manually set on/off of the trip mode by using the input device 15 in the vehicle 1 or the like. In the case where the user A manually sets the trip mode to be on, the state where the trip mode is on indicates that the user A of the vehicle 1 is in a state of being willing to make friends with (or willing to interact with) another user B during the drive (in such a sense, the trip mode may be restated as a "friendly mode"). When the user A sets the trip mode to be on, just as described, a friendly mode signal is included in the data that is sent from the vehicle 1 to the management device 30.

In addition, the user A can answer a questionnaire for setting an α evaluation value and a β evaluation value of the user A by using the mobile terminal 20. More specifically, the user A inputs the answers for the questionnaire shown on the mobile terminal 20 by using the input/output device 20d, and the mobile terminal 20 sends questionnaire answer information related to the thus-input answers to the management device 30. Then, the management device 30 sets the α evaluation value and the β evaluation value of the user A on the basis of the questionnaire answer information. Here, the α evaluation value of the user A indicates likeliness of receiving action from a "product" (corresponding to an α cycle), and the β evaluation value of the user A indicates likeliness of receiving action from a "person" (corresponding to a β cycle).

The mobile terminal 20 can automatically be linked with the controller 10 by using the near-field wireless communication technology. In the case where the mobile terminal 20 is communications equipment that is registered in advance, the controller 10 authenticates the mobile terminal 20 and automatically establishes the communication line. At the time, the controller 10 can receive the mobile terminal identification number from the mobile terminal 20, and can add the mobile terminal identification number to the data to be sent to the management device 30.

Next, the management device 30 is a computer device (the server) including a processor 30a, memory 30b, a communication circuit 30c, an input/output device 30d, a display device 30e, and the like, and is configured to execute various types of processing when the processor 30a runs programs stored in the memory 30b. The memory 30b stores various types of the databases in addition to the programs. The management device 30 corresponds to the "experience acquisition support apparatus" in the present invention, and executes experience acquisition support processing for supporting the acquisition of the experience through the vehicle 1. This experience acquisition support processing includes: travel route setting processing for setting the travel route of the vehicle 1 to be suggested to the user A; friendship support processing for supporting formation of friendships among the users of the plural vehicles 1; and video editing processing for editing the video captured by the imaging device 11 in the vehicle 1.

The databases include a user database 31a, an input information database 31b, a browsing information database 31c, and the like. The user can browse these databases by using the browser program in the mobile terminal 20.

In the user database 31a, user data of the user A is stored. The user data includes data (profile information and the like) that can be registered and updated by the user and data (a user identification number and the like) that is automatically allocated by the management device 30 at the time of user registration. The user A can perform the user registration in the management device 30 by using the mobile terminal 20.

The user data includes the user identification number, the vehicle identification number, the mobile terminal identification number, the profile information, my list information, friend information, setting information (profile exchange approval setting and the like), status information (total number of greetings, a friendly mode flag, and the like) of the user A. The user identification number is an identification number used to identify each user. The vehicle identification number is an identification number used to identify the vehicle 1 owned the user A. The mobile terminal identification number is an identification number used to identify the mobile terminal 20 owned by the user A.

The profile information is personal information of the user A and includes a pseudonym, favorite spot information (a name and a thumbnail image), a hobby, self-introduction, and an updatable diary of the user A. Partial information of the profile information is simple profile information, and the simple profile information includes the pseudonym and the favorite spot information.

The my list information is registered information of favorite spots of the other users B that are acquired from the other users B. The friend information is information on the other users B as friends, and includes: a friend identification number that is assigned to each of the other users B as the friends; and the user identification number, the profile information, and the like of each of the other users B. When a friend request is accepted by the other user B, the user A becomes "friends" with the other user B in a virtual space.

The profile exchange approval setting is information on whether to automatically accept or reject a friend request when the user A receives the friend request from the other user B. The total number of greetings is the total number of greetings received from the other vehicles 1B by greeting processing during a drive of the vehicle 1. The friendly mode flag is a flag that is set to be on when the friendly mode signal is received from the vehicle 1, the trip mode (the friendly mode) of which is set to be on. That is, when receiving the friendly mode signal from the vehicle 1, the management device 30 sets the vehicle 1 to a "friendly vehicle (or a friendly moving body)". In other words, when receiving the friendly mode signal from the vehicle 1, the management device 30 sets the friendly mode flag of the vehicle 1 to be on.

The user data also includes: the questionnaire answer information related to the answers of the questionnaire for setting the α evaluation value and the β evaluation value of the user A; and the α evaluation value and the β evaluation value that are actually set on the basis of the questionnaire answer information. The user data further includes a name and an address (that is, a destination name and a destination address) for mailing an album, which is generated from the video, to the user A.

The input information database 31b is a database that stores the image data, the measurement data, the input data, and the like that are received from the vehicle 1 owned by the user A as well as map data, outside traffic information, and the like. In particular, the input information database 31b includes travel log data. The travel log data is log data of a drive took by the user A. Every time the user takes a drive (that is, every time the trip mode is turned on), the management device 30 generates the new travel log data. More specifically, in a period from turning-on of the trip mode of the vehicle 1 to turning-off thereof, various types of data are accumulated as the travel log data for such a drive. The travel log data includes a unique drive identification number, the vehicle identification number used to identify the vehicle 1, the positional information indicative of a travel path of the vehicle 1, the positional information of the mobile terminal 20, IG on/off information, the number of greetings, the user identification number (and/or the vehicle identification number) of another user who has greeted, the passenger sightline information, the driving state information, the conversation volume, the headcount information, and the operation information of the like button. In addition, in association with such a drive identification number, the input information database 31b stores the image data of each of the in-vehicle camera 11a and the plural outside cameras 11b, the emotional information of the driver, and the emotional information of the passenger. The image data of each of the in-vehicle camera 11a and the plural outside cameras 11b is associated with a video identification number.

The browsing information database 31c is a database for storing data that is generated when the management device 30 processes the data in the input information database 31b. The browsing information database 31c includes a content database and a route-related database.

In the content database, information on each of the plural videos that are edited in the plural editing modes in the management device 30 is stored in association with an identification number of the respective editing mode (a video content identification number). These video content identification numbers are associated with the video identification numbers described above. In addition, in the content database, information on the album that is generated on the basis of such a video, more specifically, still image information and album creation date and time information used for the album in the video are stored in association with an album identification number. The user identification number is associated with this album identification number.

The route-related database stores, in association with a route identification number that is assigned every time the travel route is set, the departure point, the end point, the departure date and time, and the total trip time that are input by the user A as well as the travel route and a destination that are set on the basis of these types of the input information. The above-described drive identification number is associated with this route identification number. In addition, the route-related database stores, in association with the drive identification number: the positional information, the α evaluation value, and the β evaluation value that are linked to an identification number of each of plural points included in the map data; and start point information, end point information, the α evaluation value, and the β evaluation value that are linked to an identification number of each of plural sections included in the map data. These types of the information are used to set the travel route. Here, the α evaluation values of the point and the section each indicate a degree of the action from the "product" provided thereby (corresponding to the α cycle), and the β evaluation values of the point and the section each indicate a degree of the action from the "person" provided thereby (corresponding to the β cycle).

### [Experience Acquisition Support Processing]

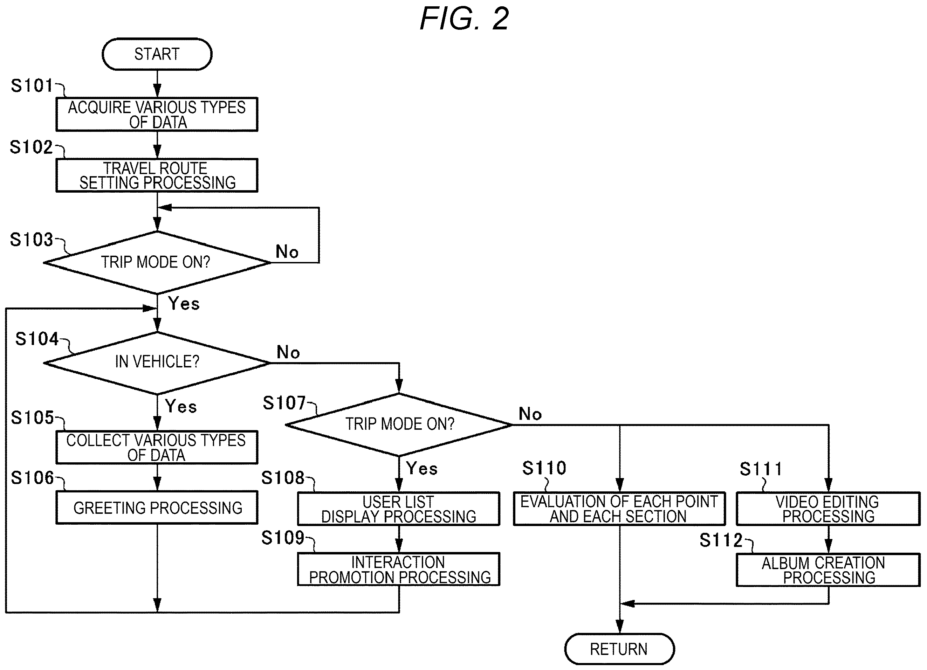

Next, a specific description will be made on the experience acquisition support processing that is executed by the management device 30 in the embodiment of the present invention with reference to Fig. 2. Fig. 2 illustrates a processing flow of the experience acquisition support processing that is executed by the management device 30 in this embodiment. The experience acquisition support processing according to this embodiment mainly includes the travel route setting processing, the friendship support processing, and the video editing processing. An outline description will herein be made on an overall processing flow of this experience acquisition support processing.

The friendship support processing includes: the greeting processing that is executed while it is determined that the user A is in the vehicle 1 (or drives the vehicle 1); and encounter processing that is executed while it is determined that the user A is not in the vehicle 1 (while being out of the vehicle 1). That is, the greeting processing is executed while the user A drives the vehicle 1, and the encounter processing is executed while the user A is off the vehicle 1 (for example, while taking a walk on the sightseeing spot in the middle of the drive).

First, the management device 30 reads various types of data that are required for the experience acquisition support processing from the memory 30b, and acquires the various types of data from the vehicle 1 and the mobile terminal 20 (S101). For example, the management device 30 acquires the data required in the travel route setting processing, which will be executed later, and the like. Next, the management device 30 executes the travel route setting processing for setting the travel route of the vehicle 1 to be suggested to the user A (S102).

Next, the management device 30 determines whether the trip mode is set to be on (S103). In one example, when the IG is on in a state where the travel route is set in the vehicle 1, the controller 10 in the vehicle 1 sets the trip mode to be on. In another example, in order to express intention to become friends with (or intention to interact with) another user, the user A manually sets the trip mode to be on.

If the trip mode is set to be on (S103: Yes), the management device 30 determines whether the user A is in the vehicle 1 (S104). In one example, in the case where the IG state signal received from the vehicle 1 is on, the management device 30 determines that the user A is in the vehicle 1. In another example, the management device 30 receives the position signals from the vehicle 1 and the mobile terminal 20. Then, in the case where a distance between the vehicle 1 and the mobile terminal 20 is shorter than a specified distance (for example, 20 m), the management device 30 determines that the user A is in the vehicle 1. In further another example, in the case where a state signal of a parking brake received from the vehicle 1 is off, the management device 30 determines that the user A is in the vehicle 1.

If the user A is in the vehicle 1 (S104: Yes), the management device 30 collects various types of data that are acquired during movement of the vehicle 1 (S105). More specifically, the management device 30 collects the image data by the in-vehicle camera 11a and the outside cameras 11b, the emotional information of the driver and the passenger, and the like in addition to the travel log data described above, and stores these in the input information database 31b.

In addition, in parallel with collection of the various types of data described above (S105), the management device 30 executes the greeting processing (S106). In this greeting processing, in the case where the vehicle 1 and another vehicle 1B approach each other within a specified distance (for example, pass each other) during the travel of the vehicle 1, the display device 14 in the vehicle 1 shows a greeting expression.

If the user A is not in the vehicle 1 (S104: No), that is, if the user A is off the vehicle 1, the management device 30 further determines whether the trip mode is kept on (S107). As described above, when the vehicle 1 arrives at the end point of the travel route and the IG is turned off, the trip mode is set to be off. Accordingly, here, it is determined whether the vehicle 1 has arrived at the end point of the travel route and the IG is not turned off.

If the trip mode is on (S107: Yes), that is, if the user A is off the vehicle 1 while the trip mode is on, the management device 30 executes the encounter processing (S108, S109).

More specifically, in the case where the mobile terminal 20 of another user B who is active in an on-state of the trip mode exists within a specified range (for example, within 500 m) around the mobile terminal 20 of the user A, the management device 30 causes the mobile terminal 20 of the user A to show the existence of this user B, and executes user list display processing to cause the mobile terminal 20 of the user A to show the simple profile information of the user B (S108).

Then, in the case where the mobile terminal 20 of another user B who is active in the on-state of the trip mode exists within a specified range (for example, within 10 to 50 m) around the mobile terminal 20 of the user A, the management device 30 causes the mobile terminal 20 of the user A to show the existence of this user B (in particular, notify of approach of the user B) so that the user A can interact with this user B, in other words, the user A can approach the user B, and executes interaction promotion processing to cause the mobile terminal 20 of the user A to show the detailed profile information of the user B (S109). In this interaction promotion processing, the user A can become friends with another user B in the virtual space (the Internet space) and can also meet another user B near a current point in a real space.

On the other hand, if the trip mode is off (S107: No), that is, if the vehicle 1 has arrived at the end point of the travel route and the IG has been turned off, based on the travel log data and the like, the management device 30 calculates the α evaluation value and the β evaluation value of each of the points and each of the sections for reference in the next travel route setting processing (S110).

In addition, in parallel with the calculation of the α evaluation values and the β evaluation values described above (S110), the management device 30 executes the video editing processing to edit the videos that are captured by the in-vehicle camera 11a and the outside cameras 11b during the travel of the vehicle 1 (S111). Furthermore, the management device 30 generates a video file, which can be browsed by another user B and the like, from the thus-edited videos.

Next, the management device 30 executes album creation processing to extract the plural still images from the video, which is edited in the video editing processing, per specified period (for example, one month) and generate print data for creating an album including the plural still images (S112).

### [Travel Route Setting Processing]

Next, a specific description will be made on the travel route setting processing according to the embodiment of the present invention.

In this embodiment, the management device 30 sets the travel route of the vehicle 1 to be suggested to the user on the basis of the α evaluation value, which is acquired by evaluating each of the point and the section in the map data from a perspective of the influence of the element other than the interaction with the person on the experience (corresponding to the action from the "product" (the α cycle)), and on the basis of the β evaluation value, which is acquired by evaluating each of the point and the section in the map data from a perspective of the influence of the interaction with the person on the experience (corresponding to the action from the "person" (the β cycle)). In addition, the management device 30 sets the α evaluation value and the β evaluation value of each of these point and section on the basis of the positional information, the driving state information, the emotional state-related information, the headcount information, and the like that are sequentially acquired from the plural vehicles 1 when the trip mode is on (that is, when the vehicle 1 moves along the set travel route). In this case, every time the management device 30 acquires these types of the information from the vehicle 1, the trip mode of which is on, the management device 30 recalculates and updates the α evaluation value and the β evaluation value of each of the point and the section on the basis of the acquired information after the trip mode is set to be off.

In addition, in this embodiment, the management device 30 conducts the questionnaire of the user in advance. In this way, the management device 30 sets the α evaluation value, which is acquired by evaluating likeliness of the user to receive the influence of the element other than the interaction with the person on the experience, and the β evaluation value, which is acquired by evaluating likeliness of the user to receive the influence of the interaction with the person on the experience. Then, the management device 30 sets the travel route that is suited to the user on the basis of, in addition to the α evaluation value and the β evaluation value of each of the point and the section described above, the α evaluation value and the β evaluation value of the user.

The a evaluation value and the β evaluation value of each of the point and the section respectively correspond to the "first evaluation value" and the "second evaluation value" in the present invention. The α evaluation value and the β evaluation value of the user respectively correspond to the "third evaluation value" and the "fourth evaluation value" in the present invention. Each of these α evaluation value and β evaluation value is set to a value within a range from 1 to 5, for example.

In particular, in this embodiment, for the user whose α evaluation value is higher than the β evaluation value, the management device 30 sets the travel route that includes the point or the section with the relatively high β evaluation value, in detail, the point or the section, for which the higher β evaluation value than the β evaluation value of the user is set. Meanwhile, for the user whose β evaluation value is higher than the α evaluation value, the management device 30 sets the travel route that includes the point or the section with the relatively high α evaluation value, in detail, the point or the section, for which the higher α evaluation value than the α evaluation value of the user is set. In this way, by suggesting the travel route that includes the point or the section, for which the lower one of the α evaluation value and the β evaluation value of the user is set to be higher, it is possible to urge the user to have new experiences.

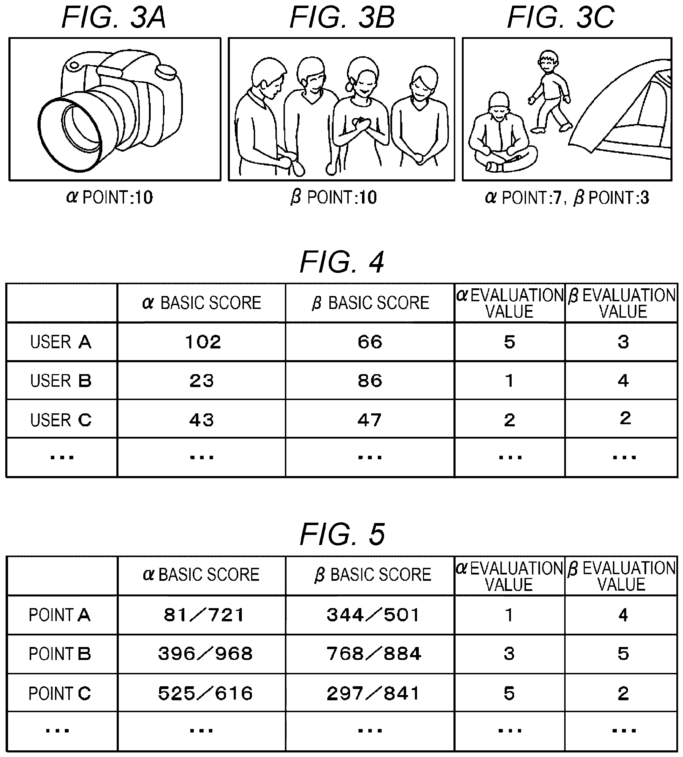

Next, a description will be made on a method for setting the α evaluation value and the β evaluation value of the user according to this embodiment with reference to Fig. 3 and Fig. 4.

Fig. 3 includes explanatory views of the questionnaire for setting the α evaluation value and the β evaluation value of the user in this embodiment. Figs. 3(A) to (C) each illustrate an example of a picture that is shown to the user in the questionnaire. The questionnaire is conducted by using the mobile terminal 20. More specifically, the mobile terminal 20 shows a questionnaire screen including plural pictures as illustrated in Fig. 3. Then, by looking at this questionnaire screen, the user answers the questionnaire by using the input/output device 20d in the mobile terminal 20. For example, the questionnaire may be conducted at initial registration of a specified application for setting the travel route (and periodically (for example, every three months) or upon request from the user thereafter).

More specifically, in the questionnaire, the plural pictures are presented, and the user selects one picture from the presented pictures. In this case, a question, "Please select one you like the most.", a question, "Please select one you want to experience", or the like is provided, and the user selects the picture according to this question. In the questionnaire, the plural questions of this type are prepared, and the user selects the picture for each of the plural questions.

In each of the pictures, an α point, which is set in advance from the perspective of the influence of the element other than the interaction with the person on the experience (corresponding to the action from the "product" (the α cycle)), and/or a β point, which is set in advance from the perspective of the influence of the interaction with the person on the experience (corresponding to the action from the "person" (the β cycle)) is given. More specifically, the high α point (for example, 10 points) is given to a picture of enjoying solo activity, a picture of an object only (Fig. 3(A)), and a picture of a small group of persons (Fig. 3(C)). Solo enjoyment means presence of an attractive thing. Thus, the high α point is given to the picture of enjoying the solo activity. On the contrary, the high β point (for example, 10 points) is given to a picture of a large number of persons (Fig. 3(B)) and a picture of enjoyment by plural persons. Here, the α point or the β point that is set for each of the pictures is invisible from the user. In addition, an option, "Not interested in any", may be provided for each of the questions. Then, for the question, for which this option is selected, the α point or the β point may be set to 0.

The management device 30 generates questionnaire data including the plural questions, each of which includes the plural pictures, for each of which the α point and/or the β point is set. The mobile terminal 20 receives this questionnaire data from the management device 30 and conducts the questionnaire. Then, the mobile terminal 20 sends, as the questionnaire answer information, information on the picture selected by the user for each of the plural questions in the questionnaire to the management device 30. Based on this questionnaire answer information, the management device 30 adds up the α points that are set for the selected pictures in the plural questions, and adds up the β points that are set for the selected pictures in the plural questions. In this way, the management device 30 calculates an α basic score and a β basic score of the user. Then, the management device 30 subjects the thus-calculated α basic score and β basic score of the user to relative evaluation with the α basic scores and the β basic scores of all the users, so as to calculate the α evaluation value and the β evaluation value of the user.

Fig. 4 is an explanatory table of the method for setting the α evaluation value and the β evaluation value of the user on the basis of the questionnaire in this embodiment. Fig. 4 illustrates a specific example of the α basic score and the β basic score, which are respectively calculated by adding up the α points and the β points set in the plural pictures selected in the questionnaire, as well as the α evaluation value and the β evaluation value (a value from 1 to 5 for each), which are respectively set by the relative evaluation of the α basic score and the β basic score, for each of the users A to C.

For example, the management device 30 makes the relative evaluation of the α basic score and the β basic score of each of the users by the method as will be described below, so as to set the α evaluation value and the β evaluation value of each of the users. That is, the management device 30 (1) sets the α, β evaluation values to "5" when the α, β basic scores position in top 20% of all the users, (2) sets the α, β evaluation values to "4" when the α, β basic scores fall below top 20% but position in top 40% of all the users, (3) sets the α, β evaluation values to "3" when the α, β basic scores fall below top 40% but position in top 60% of all the users, (4) sets the α, β evaluation values to "2" when the α, β basic scores fall below top 60% but position in top 80% of all the users, and (5) sets the α, β evaluation values to "1" when the α, β basic scores fall below top 80% of all the users.

Next, a description will be made on a method for setting the α evaluation value and the β evaluation value of the point according to this embodiment with reference to Fig. 5. Fig. 5 illustrates a specific example of the α basic score, the β basic score, the α evaluation value, and the β evaluation value of each of points A to C. Each of the points A to C particularly corresponds to a specified facility, the sightseeing spot, or the like.

In this embodiment, for each of the points included in the map data, the management device 30 calculates, as the α basic score, a ratio of the number of the vehicles 1 owned by persons who visit the point alone in the on-state of the trip mode to the total number of the vehicles 1 owned by persons who visit the point alone on the basis of the headcount information indicative of the number of the occupants in each of the vehicles 1 and the positional information indicative of a movement path during the movement of each of the vehicles 1. As described above, solo enjoyment means the presence of the attractive thing. Thus, for the point where the number of the vehicles owned by the persons who visit the point alone is large, the high α basic score is calculated. In addition, for each of the points included in the map data, the management device 30 calculates, as the β basic score, a ratio of the number of the vehicles 1 owned by persons who visit the point in groups in the on-state of the trip mode to the total number of the vehicles 1 owned by persons who visit the point in the groups on the basis of the headcount information and the positional information. Then, the management device 30 subjects the thus-calculated α basic score and β basic score for the certain point to relative evaluation with the α basic scores and the β basic scores of all the points, so as to set the α evaluation value and the β evaluation value (the value from 1 to 5 for each) of the point. The method for subjecting the α basic score and the β basic score of the point to the relative evaluation so as to set the α evaluation value and the β evaluation value is similar to the above-described method for setting the α evaluation value and the β evaluation value of the user.

However, the method for setting the α evaluation value and the β evaluation value of the point is not limited to the above-described method. In another example, while the α evaluation value of the point may be set on the basis of the number of the users who have the high α evaluation value and visit the point, the β evaluation value of the point may be set on the basis of the number of the users who have the high β evaluation value and visit the point. In further another example, the α evaluation value of the point may be set on the basis of the number of the users whose emotions are activated after visiting the point, and the β evaluation value of the point may be set on the basis of the number of postings of the point on an SNS.

Next, a description will be made on a method for setting the α evaluation value and the β evaluation value of the section according to this embodiment. In this embodiment, for each of the sections included in the map data, the management device 30 calculates the total number of the vehicles 1 that have passed the section and the number of the vehicles 1 that have been brought into the sleek driving state while passing the section on the basis of the driving state information and the positional information during the movement of the vehicles 1. Then, the management device 30 sets the α evaluation value on the basis of a ratio of these numbers. In addition, for each of the sections included in the map data, the management device 30 calculates the total number of the vehicles 1 that have passed the section and the number of the vehicles 1 in each of which the like button indicating that the user likes the scenery is operated to be on while the vehicle 1 passes the section on the basis of the emotional state-related information (in particular, the operation information of the like button) and the positional information during the movement of the vehicles 1. Then, the movement device 30 sets the α evaluation value on the basis of a ratio of these numbers.

In particular, the management device 30 calculates, as the α basic score, a value that is acquired by adding a ratio of the number of the vehicles 1 that have been brought into the sleek driving state in a portion at a specified rate or higher (for example, 50% or higher) in the section to the total number of the vehicles 1 that have passed the section and a ratio of the number of the vehicles 1, in each of which the like button has been on when the vehicle 1 passes the section, to the total number of the vehicles 1 that have passed the section. Then, the management device 30 subjects the thus-calculated α basic score for the certain section to relative evaluation with the α basic scores of all the sections, so as to set the α evaluation value (the value from 1 to 5) of the section. The method for setting the α evaluation value through the relative evaluation of the α basic score of the section is similar to the above-described method. Here, the description has been made on the example in which the α evaluation value of the section is set on the basis of both of the number of the vehicles 1 that have been brought into the sleek driving state when passing the section and the number of the vehicles 1, in each of which the like button has been on when the vehicle 1 passes the section. However, in another example, the α evaluation value of the section may be set on the basis of only one of these.

Meanwhile, for each of the sections included in the map data, the management device 30 calculates, as the β basic score, a ratio of the number of the vehicles 1, in each of which the emotions of the plural persons have become activated when the vehicle 1 passes the section, to the total number of the vehicles 1 with the plural occupants that have passed the section on the basis of the emotional state-related information (in particular, the emotional information of the driver and the passenger), the headcount information, and the positional information during the movement of the vehicles 1. Then, the management device 30 subjects the thus-calculated β basic score for the certain section to relative evaluation with the β basic scores of all the sections, so as to set the β evaluation value (the value from 1 to 5) of the section. The method for setting the β evaluation value through the relative evaluation of the β basic score of the section is similar to the above-described method.

Here, the section, for which the α evaluation value and the β evaluation value are set, is defined by dividing a road in the map data by a specified length (for example, 100 m) in advance in one example, or is defined by linkage between adjacent nodes in another example. In addition, in the case where the α evaluation values match each other and the β evaluation values match each other in the two or more adjacent sections, these sections are preferably handled as one section and used for setting of the travel route. This is because, in the case where the sections having the same characteristics continue, such sections are desirably presented to the user as a collective single section (a consecutive section).

However, the method for setting the α evaluation value and the β evaluation value of the section is not limited to the above-described method. In another example, the α evaluation value of the section may be set on the basis of the number of the vehicles 1 that are operated with a low gear and/or at a high speed when passing the section. In further another example, in the case where the passenger's emotion is activated at the time of passing the section, the α evaluation value of the section may be set on the basis of the number of the vehicles 1 in each of which the passenger's sightline is oriented to the outside. Meanwhile, in the case where the passenger's emotion is activated at the time of passing the section, the β evaluation value of the section may be set on the basis of the number of the vehicles 1 in each of which the passenger's sightline is oriented to the inside. In yet another example, the β evaluation value of the section may be set on the basis of the number of the vehicles 1 in each of which the conversation volume therein has become equal to or larger than a specified value when the vehicle 1 passes the section.

Next, a description will be made on a method for setting the travel route in this embodiment. In this embodiment, the management device 30 sets the travel route that is suited to the user on the basis of the α evaluation value and the β evaluation value of each of the points and each of the sections and on the basis of the α evaluation value and the β evaluation value of the user, which are set as described above, according to a condition (a trip condition) that is defined by the departure point, the end point, the departure date and time, and the total trip time input by the user using the mobile terminal 20.

More specifically, for the user whose α evaluation value is higher than the β evaluation value, the management device 30 sets the travel route that at least includes the point or the section, for which the higher β evaluation value than the β evaluation value of the user is set, and the point or the section, for which the same or higher α evaluation value as or than the α evaluation value of the user is set. Meanwhile, for the user whose β evaluation value is higher than the α evaluation value, the management device 30 sets the travel route that at least includes the point or the section, for which the higher α evaluation value than the α evaluation value of the user is set, and the point or the section, for which the same or higher β evaluation value as or than the β evaluation value of the user is set. For the user whose α evaluation value and β evaluation value are equal to each other, such a travel route only needs to be set that includes the point or the section, for which the same or higher α evaluation value and the same or higher β evaluation value as or than the α evaluation value and the β evaluation value of the user are set.

In addition, the management device 30 generates image data for causing the mobile terminal 20 and the vehicle 1 (in detail, the display device 20e in the mobile terminal 20 and the display device 14 in the vehicle 1) to show the thus-set travel route. More specifically, the management device 30 causes the set travel route to be shown on a map screen, and causes the α evaluation value and the β evaluation value of each of the point and the section to be shown in a visually recognizable manner on the map screen. Further in detail, the management device 30 causes the α evaluation value and the β evaluation value of each of the point and the section included in the travel route as a heat map.

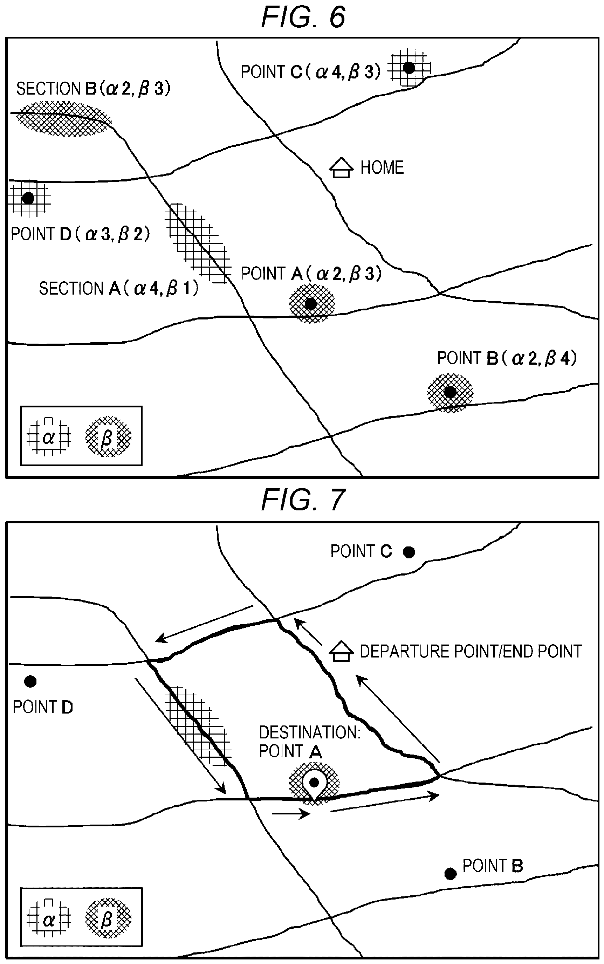

Here, a description will be made on a specific example of the method for setting the travel route according to this embodiment with reference to Fig. 6 and Fig. 7. Fig. 6 is an explanatory view in which candidates of the points and the sections used to set the travel route are shown on a map in this embodiment (not provided to the user). Fig. 7 illustrates a display screen example of the travel route and the heat map set in this embodiment. This screen is shown on the display device 20e of the mobile terminal 20 and the display device 14 of the vehicle 1. Here, a case where the following trip conditions are input will be exemplified. The trip conditions are that the α evaluation value and the β evaluation value of the user are 4, 2, respectively, that the departure point and the end point are set to home, and that the total trip time is set to three hours.

Fig. 6 illustrates points A to D and sections A, B (each corresponding to the consecutive section) that are possibly referred in the travel route setting processing under the trip conditions as described above, and also illustrates the α evaluation value and the β evaluation value that are set for each of these points A to D and sections A, B. In addition, for each of the points A to D and the sections A, B, Fig. 6 illustrates higher one of the α evaluation value and the β evaluation value in the heat map. For example, in regard to the points A, B and the section B, the heat map indicating that the β evaluation value is higher than the α evaluation value is shown. In regard to the points C, D and the section A, the heat map indicating that the α evaluation value is higher than the β evaluation value is shown.

In the above example, since the α evaluation value (4) of the user is higher than the β evaluation value (2) of the user, the travel route including the point A, for which the higher β evaluation value (3) than the β evaluation value (2) of the user is set, and the section A, for which the same α evaluation value (4) as the α evaluation value (4) of the user is set, is set. In this case, as illustrated in Fig. 7, the travel route including the point A and the section A and the heat map of each of these point A and section A are shown on the map screen. More specifically, for the point A, the heat map indicating that the β evaluation value is higher than the α evaluation value is shown. For the section A, the heat map indicating that the α evaluation value is higher than the β evaluation value is shown.

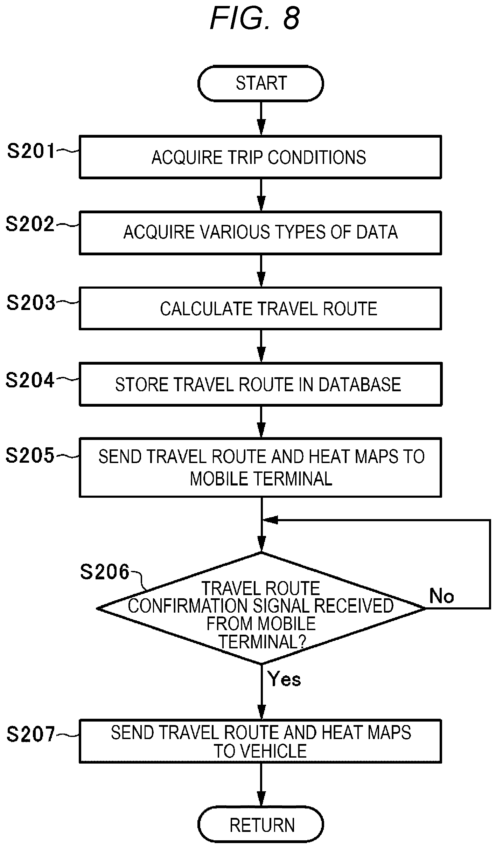

Next, a description will be made on an overall flow of the travel route setting processing (S102 in Fig. 2) according to this embodiment with reference to Fig. 8. Fig. 8 illustrates a processing flow of the travel route setting processing that is executed by the management device 30 in this embodiment. The travel route setting processing is started when the trip conditions that are input by the user are sent from the mobile terminal 20 to the management device 30. In this case, the user activates the specified application that is installed in the mobile terminal 20 and used to set the travel route, logs into this application, and thereafter inputs the trip conditions in the mobile terminal 20.

First. the management device 30 acquires the trip conditions that are sent from the mobile terminal 20 (S201). More specifically, the management device 30 acquires, as the trip conditions, the departure point, the end point, the departure date and time, and the total trip time that are input by the user using the mobile terminal 20.

Next, the management device 30 reads various types of data that are required to set the travel route from the memory 30b according to the acquired trip conditions and the like (S202). More specifically, the management device 30 first refers to the user database 31a, so as to identify the user identification number of the user of the mobile terminal 20 from the mobile terminal identification number of the mobile terminal 20 that has sent the trip conditions. Then, the management device 30 acquires the α evaluation value and the β evaluation value of the user corresponding to this user identification number. In addition, the management device 30 refers to the route-related database in the browsing information database 31c, so as to acquire the positional information of each of the plural points, the α evaluation value and the β evaluation value of each of the plural points, the start point positional information and the end point positional information of each of the plural sections, and the α evaluation value and the β evaluation value of each of the plural sections that are used to set the travel route. In one example, the management device 30 roughly calculates an area where the vehicle 1 can travel on the basis of the departure point, the end point, and the total trip time, identifies the plural points and the plural sections that are included in this area, and acquires the α evaluation value and the β evaluation value of each of these points and sections, and the like.

Next, the management device 30 calculates the travel route to be suggested to the user on the basis of the α evaluation value and the β evaluation value of the user, which are acquired as described above, the α evaluation value and the β evaluation value of each of the plural points and sections, and the like (S203). In this case, the management device 30 calculates the travel route that is suited to the user on the basis of the α evaluation value and the β evaluation value of the user and the α evaluation value and the β evaluation value of each of the points and each of the sections from such travel routes that satisfy the trip conditions input by the user, that is, conditions for the departure point, the end point, the departure date and time, and the total trip time. More specifically, for the user whose α evaluation value is higher than the β evaluation value, the management device 30 calculates the travel route that at least includes the point or the section, for which the higher β evaluation value than the β evaluation value of the user is set, and the point or the section, for which the same or higher α evaluation value as or than the α evaluation value of the user is set. Meanwhile, for the user whose β evaluation value is higher than the α evaluation value, the management device 30 sets the travel route that at least includes the point or the section, for which the higher α evaluation value than the α evaluation value of the user is set, and the point or the section, for which the same or higher β evaluation value as or than the β evaluation value of the user is set. In addition, the management device 30 creates the heat map for showing the α evaluation value and the β evaluation value of each of the points and the sections included in the thus-calculated travel route.

Next, the management device 30 stores the travel route (the heat maps may be included) calculated as described above in the route-related database in the browsing information database 31c (S204). Next, the management device 30 sends the travel route and the heat maps to the mobile terminal 20 (S205). The travel route and the heat maps, which are sent just as described, are shown on the display device 20e of the mobile terminal 20.

Next, the management device 30 determines whether a signal for confirming the travel route sent to the mobile terminal 20 (a travel route confirmation signal) has been received from the mobile terminal 20 (S206). This travel route confirmation signal is sent from the mobile terminal 20 to the management device 30 when the user checks the travel route and the heat maps shown on the mobile terminal 20 and performs an operation to confirm (decides, in other words) this travel route. By the way, the user can cancel the travel route. In such a case, a travel route cancellation signal is sent to the management device 30. When receiving the travel route cancellation signal, the management device 30 may set a new travel route to be suggested to the user.

If the management device 30 has received the travel route confirmation signal from the mobile terminal 20 (S206: Yes), the management device 30 sends the travel route and the heat maps to the vehicle 1 (S207). When the IG is turned on after reception of the travel route and the heat maps, just as described, the trip mode of the vehicle 1 is set to be on. Then, in the vehicle 1, the display device 14 shows the travel route and the heat maps to provide a route guide that follows this travel route. While the route guide is provided along the travel route, just as described, that is, while the trip mode is on (in detail, in a period from a time point at which the trip mode is set to be on to a time point at which the trip mode is set to be off), the vehicle 1 keeps sending the positional information of the vehicle 1, the driving state information, the emotional information of the driver and the passenger, the headcount information, the operation information of the like button, and the like to the management device 30. Then, after the trip mode of the vehicle 1 is set to be off, the management device 30 recalculates the α evaluation value and the β evaluation value of each of the points and the sections on the basis of the information acquired from the vehicle 1 and information that has been received from the other plural vehicles 1 so far, and stores the α evaluation value and the β evaluation value of each of the points and the sections in the route-related database in the browsing information database 31c.

### [Friendship Support Processing]

Next, a specific description will be made on the friendship support processing, that is, the greeting processing and the encounter processing (the user list display processing and the interaction promotion processing) according to the embodiment of the present invention.

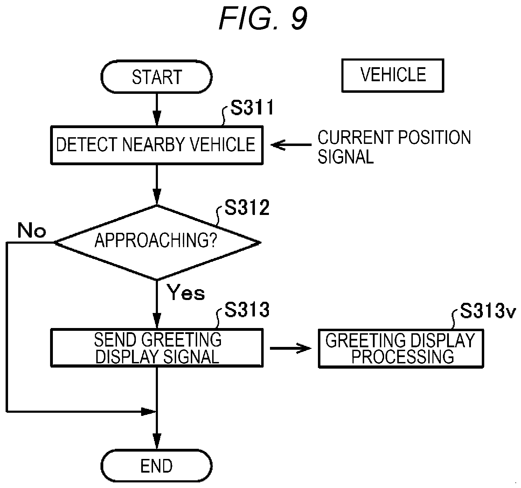

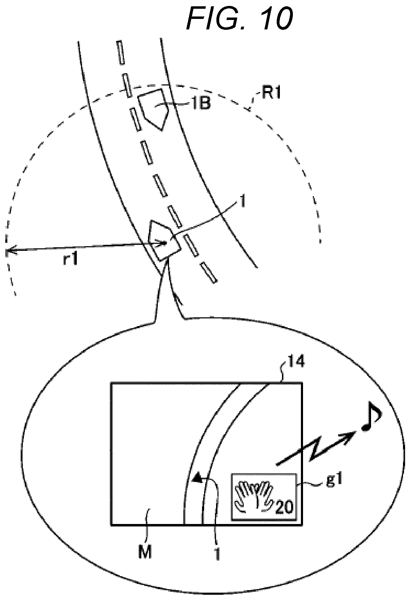

A description will be made on the greeting processing (S106 in Fig. 2) with reference to Fig. 9 and Fig. 10. Fig. 9 illustrates a processing flow of the greeting processing, and Fig. 10 is an explanatory view of the greeting processing. In the greeting processing, the management device 30 extracts another vehicle 1B that exists around the vehicle 1 on the basis of the position signal of the vehicle 1 (and another vehicle) that is periodically received by the vehicle 1 (S311). The management device 30 determines whether the one or plural other vehicles 1B (see Fig. 10) have entered a specified first range R1 (for example, a radius r1 = 20 m) around the vehicle 1 (S312).

If the other vehicle 1B does not approach the vehicle 1 (S312: No), the greeting processing is terminated. On the other hand, if the other vehicle 1B approaches the vehicle 1 (S312: Yes), the management device 30 sends a greeting display signal to the vehicle 1 (S313). When receiving the greeting display signal, the controller 10 in the vehicle 1 calculates the number of trip greetings, and executes processing to show a greeting expression g1 on the display device 14 (S313v). Fig. 10 illustrates the greeting expression g1 that is additionally shown on a navigation screen (the vehicle 1 is shown on a map M) that is shown on the display device 14 of the vehicle 1. By recognizing the greeting expression g1, the user A feels that he/she is greeted by the user B of the other vehicle 1B. Since the management device 30 executes similar processing for the other vehicle 1B, the vehicle 1 and the vehicle 1B greet each other.

The number of trip greetings corresponds to the number of the greeting display signals that are received while the trip mode is on for the current drive. For example, the greeting expression g1 includes graphical representation of hand waving by the other user B and the number of trip greetings. The greeting expression g1 can include specified speech representation emitted from a speaker.

In addition, every time the management device 30 sends the greeting display signal to the vehicle 1, the management device 30 updates the number of greetings (corresponding to the number of trip greetings) in the travel log data of the vehicle 1 by adding +1, and stores the vehicle identification number (and/or the user identification number) of the other friendly vehicle 1B that approaches the vehicle 1 in the travel log data. Furthermore, in addition to the number of greetings in the travel log data, the management device 30 calculates the total number of greetings up to the current time point and stores the calculated total number of greetings in the user data.

Alternatively, the management device 30 may store, as the number of greetings in the travel log data, the number of greetings that are received in a specified period from the controller 10 in the vehicle 1, and may further calculate the total number of greetings in the user data. In this case, when the IG signal is turned off, or when the drive is terminated, the controller 10 can send the number of trip greetings to the management device 30. At the time, as drive information for the current drive, the management device 30 may send the number of greetings (the number of trip greetings) and the total number of greetings to the mobile terminal 20 of the user. The user A can check the number of greetings and the total number of greetings by the drive information shown on the mobile terminal 20.

Alternatively, the management device 30 may send the greeting display signal to the mobile terminal 20 of the user A of the vehicle 1. In this case, the mobile terminal 20 can show the greeting expression.

Further alternatively, the management device 30 may be configured that the vehicle 1 does not execute the greeting processing for the vehicle 1B within a specified period (for example, within one hour) since the vehicle 1 executes the greeting processing for the same vehicle 1B. In this case, if determining that the other vehicle 1B has approached the vehicle 1 (S312: Yes), the management device 30 further determines whether the other vehicle 1B has already been a target of the greeting processing within the specified period. Then, if the other vehicle 1B has already been the target of the greeting processing within the specified period, the management device 30 does not send the greeting display signal to the vehicle 1. With such a configuration, for example, in the case where the vehicle 1B travels by following the vehicle 1, it is possible to prevent frequent execution of the greeting processing.

In the greeting processing, when the user A approaches or passes the vehicle of the other user B during driving of the vehicle 1, the user A and the other user B can automatically greet each other. Thus, in this embodiment, the user A and the user B can greet each other without revealing who they are. In addition, since the greeting processing is executed automatically, the user A and the user B do not feel uneasy about failure of greeting (that is, not receiving a reply from the user, to whom the greeting is sent).

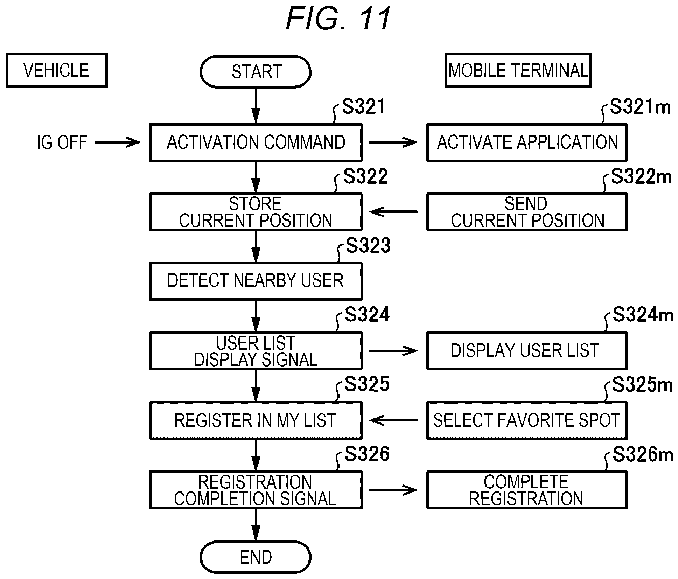

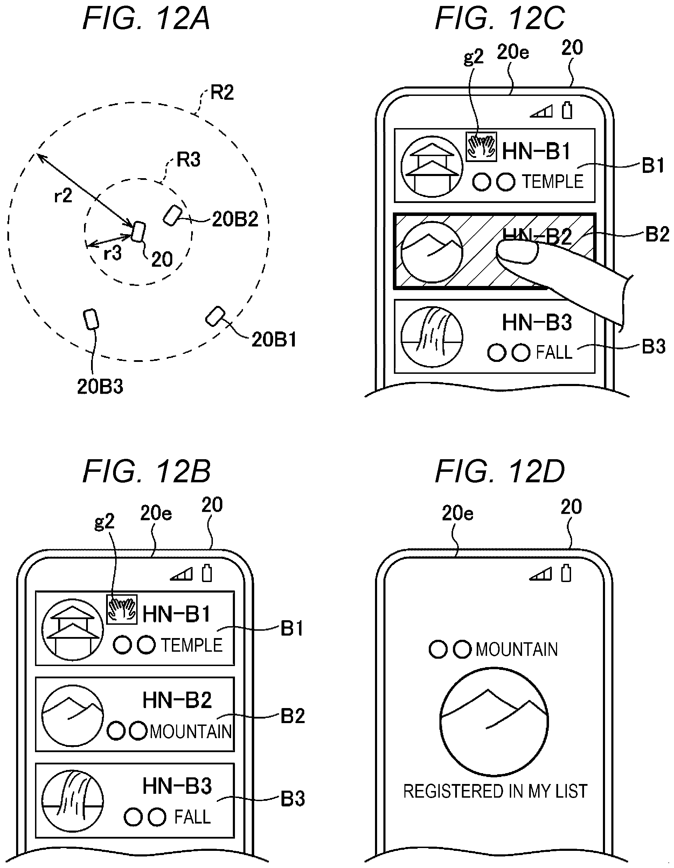

Next, a description will be made on the user list display processing (S108 in Fig. 2) that is executed in the encounter processing with reference to Fig. 11 and Fig. 12. Fig. 11 illustrates a processing flow of the encounter processing (the user list display processing), and Fig. 12 includes explanatory views of the user list display processing. When the user list display processing is started in the encounter processing, the management device 30 identifies the mobile terminal 20 of the user A of the vehicle 1 or the mobile terminal 20 that is linked to the vehicle 1, and sends an activation command signal for activating a friend-making application to this mobile terminal 20 (S321). When receiving the activation command signal, the mobile terminal 20 activates the friend-making application (S321m), and starts sending the position signal indicative of the current position to the management device 30 as needed (S322m). Alternatively, the mobile terminal 20 may constantly send the position signal to the management device 30.

When receiving the position signal from the mobile terminal 20, the management device 30 stores the position signal in the travel log data (S322). Similarly, the management device 30 constantly updates the current position of the mobile terminal 20B (may be referred to as a "friendly mobile terminal") of the user B of the other friendly vehicle 1B. The management device 30 detects the one or plural other friendly mobile terminals 20B that exist within a specified second range R2 (for example, a radius r2 = 500 m) around the mobile terminal 20 (S323), and sends a user list display signal to the mobile terminal 20 (S324). In Fig. 12(A), mobile terminals 20B1, 20B2, 20B3 of the other users B1, B2, B3 are located around the mobile terminal 20 of the user A.

The user list display signal includes the user identification number and the simple profile information of each of the users B of the detected friendly mobile terminals 20B. Accordingly, the management device 30 generates the user list display signal by extracting the user identification number and the simple profile information that are included in the user data of each of the users B of the detected other friendly mobile terminals 20B. Here, in the case where the detected user B is the user who executes the greeting processing in the current drive (in the case where the user identification number of the detected user B is stored as the user identification number of the greeting user in the travel log data), a greeting flag for identifying the greeting user (an additional signal) may be added to the user list display signal.

Based on the received user list display signal, the mobile terminal 20 executes processing to show the simple profile information of each of the other users B, who are located around the user A, in a list (S324m). In Fig. 12(B), the simple profile information (the pseudonym as well as a name and an image of a favorite spot) of each of the users B1, B2, B3 is shown. In addition, since the user B1 with a pseudonym "HN-B1" is the greeting user, a specified greeting symbol g2 is added on the basis of the greeting flag. In this embodiment, since the user who has executed the greeting processing is added with the greeting symbol g2, such a user is shown in a different mode from the users who have not executed the greeting processing. Here, the different mode is not limited to addition of the greeting symbol but may be addition of a different background color, different graphic representation, or the like, for example.

The user A refers to the simple profile information of each of the other users in the list, and thus can register the favorite spot that the user A is interested in the my list information of the user A. For this reason, the user A can select any of the other users B from the list that is shown on the mobile terminal 20 (S325m). In Fig. 12(C), the user A selects the user B2. By selecting the other user B2, a registration command signal is sent from the mobile terminal 20 to the management device 30. The registration command signal includes the user identification number of the selected user B2.

The management device 30 adds and registers the favorite spot of the other user B2 in the my list information of the user A on the basis of the received registration command signal (S325), and sends a registration completion signal to the mobile terminal 20 (S326). The other user B2 is identified by the user identification number that is included in the registration command signal. When receiving the registration command signal, the mobile terminal 20 executes processing to show registration completion display on the display device 20e (S326m). Fig. 12(D) illustrates the registration completion display that notifies registration of the favorite spot of the user B2 in the my list information of the user A. During the execution of the user list display processing, the management device 30 repeatedly executes the processing in steps S322 to S326.

In the user list display processing, when the user A is off the vehicle 1, the user A can check the other nearby users B in the list by using the mobile terminal 20, and can register the favorite spot that the user A is interested in the my list information from the simple profile information of each of the other users B. Thus, in this embodiment, each of the user A and the user B can reveal presence of himself/herself and a part of the information (the favorite spot) to the nearby user who is willing to interact while keeping his/her privacy. In addition, the user A and the user B can influence each other by exchanging the information (the favorite spot) without failure.

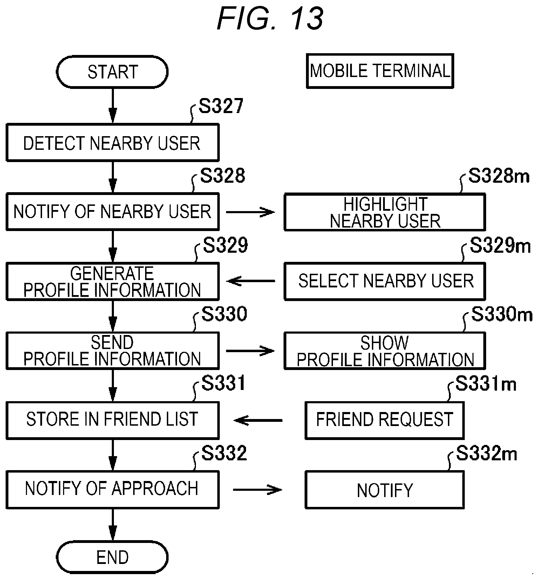

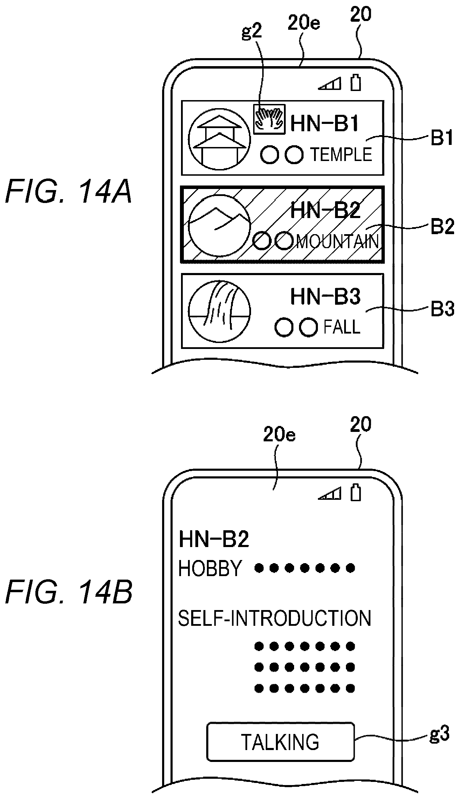

Next, a description will be made on the interaction promotion processing (S109 in Fig. 2) that is executed in the encounter processing with reference to Fig. 13 and Fig. 14. Fig. 13 illustrates a processing flow of the encounter processing (the interaction promotion processing), and Fig. 14 includes explanatory views of the interaction promotion processing. The interaction promotion processing is additionally executed as interruption processing during execution of the user list display processing. When detecting presence of the other friendly mobile terminal 20B2 owned by the other user B2 within a specified third range R3 (see Fig. 12(A). For example, a radius r3 = 10 to 50 m) around the mobile terminal 20 (S327), the management device 30 sets this user B2 as a nearby user and sends a nearby user notification signal to the mobile terminal 20 (S328). The nearby user notification signal includes the user identification number of the nearby user B2 who exists within the third range R3. The third range R3 is set as a smaller range than the second range R2 such that the user A can visually recognize the other users.

The mobile terminal 20 identifies the nearby user B2 from the other users B (B1, B2, B3) shown in the list (S324m) on the basis of the user identification number in the received nearby user notification signal, and highlights the simple profile information of the identified nearby user B2 (S328m). In Fig. 14(A), the user B2 is highlighted as the nearby user.

The user A can select the highlighted user B2. When the user A selects the highlighted user B2, the mobile terminal 20 sends a nearby user selection signal to the management device 30 (S329m). In response to the received nearby user selection signal, the management device 30 generates a profile information signal (S329), and sends the profile information signal to the mobile terminal 20 (S330; profile information display processing). The profile information signal includes the profile information of the nearby user B2. Accordingly, the management device 30 extracts the profile information from the user data of the nearby user B2 on the basis of the user identification number that is included in the received nearby user selection signal.

The mobile terminal 20 shows the profile information of the nearby user B2 on the basis of the received profile information signal (S330m). In Fig. 14(B), the profile information of the user B2 is shown. The shown profile information includes information on a hobby, self-introduction, and a diary in addition to the simple profile information (the pseudonym and the favorite spot information).

The mobile terminal 20 shows the profile information and shows a friend request button g3 (a "talking" button) (see Fig. 14(B)). By selecting the friend request button g3, the user A can become friends with the nearby user B2 in the virtual space of the experience acquisition support system S. When the user A selects the friend request button g3, the mobile terminal 20 sends a friend request signal to the management device 30 (S331m). A user identification number of the nearby user B2 is included in the friend request signal.

In response to the received friend request signal, the management device 30 executes profile exchange processing (friendship establishment processing) (S331). In this processing, the management device 30 acquires the profile information from the user data of the nearby user B2 on the basis of the friend request signal, and stores the friend identification number that is assigned to the nearby user B2 and the user identification number and the profile information of the user B2 in the friend information of the user A (S329). At the same time, the friend identification number that is assigned to the user A and the user identification number and the profile information of the user A are stored in the friend information of the nearby user B2. In this way, the user A and the other user B2 become friends in the virtual space.

When accessing the friend information of the user A by using the mobile terminal 20, the user A can further access and browse the profile information of the other user B2 who is registered as a friend. In addition, the profile information of the user B2 as the friend may be linked to the friend information. In this case, by accessing the own friend information, the user A can access the linked profile information of the other user B2. For example, the user A browses the profile information of the other user B2 as the friend again after the drive. In this way, the user A can expand his/her interest and can be motivated to take more drives or make more friends.

After the profile exchange processing, the management device 30 may send a friendship establishment signal, which is used to notify that the friendship has been established, to the user A and the user B2. In response to this signal, each of the mobile terminals 20, 20B2 can show that the friendship has been established.

Here, the management device 30 may refer to the profile exchange approval setting that is included in the user data of the other user B2 as a target of the friend request signal. In this case, in the case where the profile exchange approval setting of the other user B2 is setting to automatically approve the friend request, the profile exchange processing is executed. However, in the case where the profile exchange approval setting of the other user B2 is setting to reject the friend request, the profile exchange processing is not executed.

Alternatively, in response to the friend request signal received from the user A, the management device 30 may send a friend request notification signal to the user B2. In this case, the mobile terminal 20B2 of the user B2 shows an approval button for approving the friend request from the user A and a reject button for rejecting the friend request from the user A. Then, when the user B2 selects the approval button, the mobile terminal 20B2 sends a friend request accepting signal to the management device 30. In response to this signal, the management device 30 executes the profile exchange processing between the user A and the user B2, and establishes the friendship in the virtual space. On the other hand, when the user B2 selects the reject button, the mobile terminal 20B2 sends a friend request reject signal to the management device 30. In response to this signal, the management device 30 does not execute the profile exchange processing.

Furthermore, in the case where the friendship is established, the management device 30 executes approach notification processing to send a notification signal to the mobile terminal 20 (and the mobile terminal 20B2 of the other user B2) according to a distance between the mobile terminal 20 of the user A and the mobile terminal 20B2 of the other user B2 (S332). Based on the received notification signal, the mobile terminal 20 (and the mobile terminal 20B2 of the other user B2) notifies that both approach each other by voice or vibration (S332m). For example, the mobile terminal 20 is operated to generate the louder voice as the distance to the other mobile terminal 20B2 is reduced. In this way, the user A identifies the other user B2 in the real space and thus can easily meet and talk to the other user B2.

Alternatively, a peer-to-peer (P2P) mutual direct wireless connection may be established between the mobile terminal 20 of the user A and the mobile terminal 20B2 of the other user B2 in an adjacent state without relying on a network, and then the approach notification processing may be executed. For such a connection, Wi-Fi Aware^{®} can be used, for example. In this case, P2P communication is established between the mobile terminal 20 and the mobile terminal 20B2, so as to be able to estimate the distance therebetween according to received radio field strength. The mobile terminal 20 and the mobile terminal 20B2 can generate the voice or the vibration corresponding to the estimated distance.

In the interaction promotion processing, in a situation where the user gets out of the vehicle 1 and approaches the other user B, the user A can browse the profile information of the other user B by using the mobile terminal 20. Then, in the case where the user A is interested therein by this browsing, the user A can become friends with the other user B in the virtual space by profile exchange and can meet the other user B in the real space by the notification processing. Thus, in this embodiment, the user A can identify himself/herself to become friends with the other user B in the virtual space and the real space regardless of a possibility of failure.

### [Video Editing Processing]

Next, a specific description will be made on the video editing processing according to the embodiment of the present invention.

In this embodiment, when the trip mode is on, that is, when the vehicle 1 moves along the travel route, the management device 30 edits the plural videos that are captured by the in-vehicle camera 11a and the plural outside cameras 11b of the vehicle 1, and causes the mobile terminal 20 to show the edited video. In addition, the management device 30 generates the video file, which can be browsed by the other users, from the thus-edited video. More specifically, when the trip mode is on, as described above, based on the driving state information and the emotional state-related information (the passenger sightline information, the emotional information of the driver and the passenger, the conversation volume, and the operation information of the like button) that are sent from the controller 10 in the vehicle 1, the management device 30 determines: a first degree of action indicative of the influence of the element other than the interaction with the person on the experience of each of the driver and the passenger during the movement on the travel route (corresponding to the action from the "product" (the α cycle)); and a second degree of action indicative of the influence of the interaction with the person on the experience of each of the driver and the passenger during the movement on the travel route (corresponding to the action from the "person" (the β cycle)), and edits the videos on the basis of these first and second degrees of action.

In particular, the management device 30 identifies, as plural highlight portions, a portion in which the first degree of action is relatively high and a portion in which the second degree of action is relatively high in the original videos, generates a highlight video (in other words, an overview video) by connecting all of these plural highlight portions or one or more of the highlight portions, and also generates a chapter-added video in which a chapter is added to a position corresponding to beginning of each of the plural highlight portions in each of the original videos, so as to segment the video. The first degree of action and the second degree of action are defined on the basis of such information that is included in the driving state information and the emotional state-related information described above. For example, the first degree of action is defined by the driver's driving technique, outside scenery, and the like while the second degree of action is defined by the interaction with the passenger, the interaction with another driver, and the like. Each of the first degree of action and the second degree of action can be quantified on the basis of such information that is included in the driving state information and the emotional state-related information. That "the first degree of action is relatively high" and that "the second degree of action is relatively high" described above mean that a value indicative of the first degree of action is equal to or higher than a specified value and that a value indicative of the second degree of action is equal to or higher than a specified value.

In detail, when the driving state information indicates that the driver is in the sleek driving state, the management device 30 determines that the first degree of action is relatively high, and identifies, as the highlight portion, the video that is captured by the outside camera 11b (in particular, the camera that captures the video of the area in front of the vehicle 1) at this time. In addition, when the emotional state-related information indicates that the emotion of the driver or the passenger is activated by a stimulus from the outside of the vehicle 1 (for example, the scenery, outside noise, or the like), the management device 30 determines that the first degree of action is relatively high, and identifies, as the highlight portion, the video captured by the outside camera 11b (typically the camera that captures the video of the area in front of the vehicle 1) at this time. Meanwhile, when the emotional state-related information indicates that the emotion of the driver or the passenger is activated by in-vehicle communication (conversation), the management device 30 determines that the second degree of action is relatively high, and identifies, as the highlight portion, the video captured by the in-vehicle camera 11a at this time.

Furthermore, the management device 30 includes the plural editing modes, extracts one or more highlight portions from the plural highlight portions according to the editing mode that is selected by the user from these plural editing modes via the mobile terminal 20, and generates the highlight video by connecting these extracted highlight portions. In this case, before causing the user to select the editing mode, the management device 30 first generates the highlight video by connecting all of the plural highlight portions, and provides this highlight video to the user by the mobile terminal 20 (hereinafter, the editing mode to generate such a highlight video will be referred to as a "first editing mode", and the highlight video generated in this first editing mode will be referred to as the "first editing mode video"). That is, the management device 30 first shows a full picture of the plural highlight portions to the user by the first editing mode video, and causes the user to select the editing mode (one of second to fourth editing modes, which will be described below) that is suited to extract the preferred highlight portion from the plural highlight portions. This first editing mode video is a highlight video that includes both of the highlight portion in which the first degree of action is relatively high and the highlight portion in which the second degree of action is relatively high.

Specific contents of the second to fourth editing modes are as follows. Hereinafter, the highlight videos that are generated in the second to fourth editing modes will be referred to as a "second editing mode video", a "third editing mode video", and a "fourth editing mode video", respectively. In addition, an "identification condition of the highlight portion", which will be used below, means a condition for identifying the highlight portion, which constitutes each of the second to fourth editing mode videos, from each of the original videos.
(1) Second Editing Mode
   - Content of the second editing mode video: a video that is captured in the sleek driving state
   - Magnitude of the first or second degree of action: the first degree of action is relatively high.
   - identification condition of the highlight portion that constitutes the second editing mode video: the sleek driving state of the driver continues for two seconds or longer.
   - Camera to be applied: the outside camera 11b that captures the video of the area in front of the vehicle
(2) Third Editing Mode
   - Content of the third editing mode video: a video that is captured when the emotion of the driver or the passenger is activated by the outside scenery (that is, the video that captures the scenery the driver or the passenger likes)
   - Magnitude of the first or second degree of action: the first degree of action is relatively high.
   - Identification condition of the highlight portion that constitutes the third editing mode video: the driver operates the like button, or the passenger's emotion is activated and the passenger's sightline is oriented to the outside.
   - Camera to be applied: the outside camera 11b that captures the video in a direction corresponding to the passenger's sightline (the outside camera 11b that captures the video of the area in front of the vehicle when the passenger's sightline cannot be identified)
(3) Fourth Editing Mode
   - Content of the fourth editing mode video: a video that is captured when the emotion of the driver or the passenger is activated by the in-vehicle communication (that is, a video that is captured when the in-vehicle conversation is animated)
   - Magnitude of the first or second degree of action: the second degree of action is relatively high.
   - identification condition of the highlight portion that constitutes the fourth editing mode video: the driver's emotion or the passenger's emotion is activated and the conversation volume is large.
   - Camera to be applied: the in-vehicle camera 11a

The management device 30 further has a fifth editing mode to generate the chapter-added video in which the chapter is added to the position corresponding to the beginning of each of the plural highlight portions in the original videos as described above. A video that is generated in this fifth editing mode (hereinafter referred to as a "fifth editing mode video") differs from the above first to fourth editing mode videos, and includes all of the plural videos that are captured by the in-vehicle camera 11a and the plural outside cameras 11b instead of the highlight video (the overview video) .

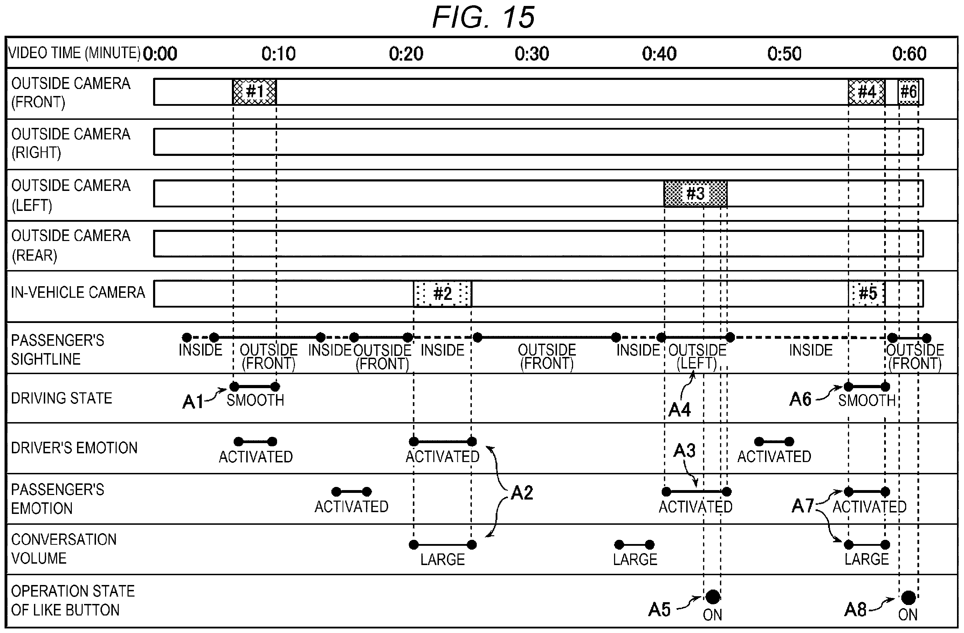

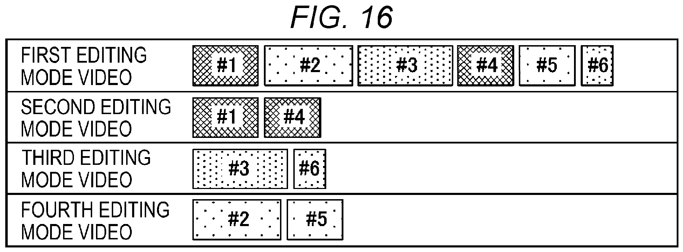

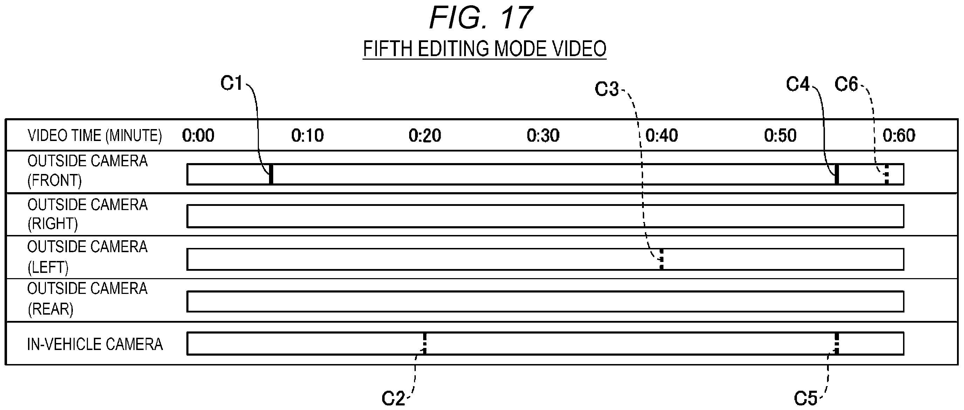

Next, a description will be made on a specific example of the video editing processing according to this embodiment with reference to Fig. 15 to Fig. 17. Fig. 15 is an explanatory chart of a method for identifying the highlight portions in the videos by the video editing processing according to this embodiment, Fig. 16 is a schematic configuration view illustrating an example of each of the first to fourth editing mode videos according to this embodiment, and Fig. 17 is a schematic configuration chart illustrating an example of the fifth editing mode video according to this embodiment.

An upper portion of Fig. 15 schematically illustrates the video captured by the outside camera 11b that captures the video of the area in front of the vehicle, the video captured by the outside camera 11b that captures the video of the area on the right side of the vehicle, the video captured by the outside camera 11b that captures the video of the area on the left side of the vehicle, the video captured by the outside camera 11b that captures the video of the area behind the vehicle, and the video that is captured by the in-vehicle camera 11a. In a portion below these videos, the passenger's sightline, the driving state, the driver's emotion, the passenger's emotion, the conversation volume, and the operation state of the like button are illustrated.

First, when the identification condition of the highlight portion for the second editing mode is satisfied, that is, when the sleek driving state of the driver continues for two seconds or longer (an arrow A1), the management device 30 identifies the video, which is captured by the outside camera 11b capturing the video of the area in front of the vehicle at this time, as a highlight portion #1 for constituting the second editing mode video. In this case, the management device 30 identifies, as the highlight portion #1, the video that is captured from five seconds before timing at which the identification condition that the sleek driving state continues for two seconds or longer starts being satisfied to five seconds after timing at which the identification condition is no longer satisfied. That is, the management device 30 identifies, as the highlight portion, a video in a period added with five seconds before and after a period in which the identification condition of the highlight portion is satisfied (the same applies below). By the way, when the like button is on, a video in a period of five seconds before and after timing at which the like button is on (that is, a video of ten seconds in total) may be identified as the highlight portion.

Next, when the identification condition of the highlight portion for the fourth editing mode is satisfied, that is, when the driver's emotion is activated and the conversation volume becomes "large" (an arrow A2), the management device 30 identifies the video captured by the in-vehicle camera 11a at this time as a highlight portion #2 for constituting the fourth editing mode video.

Next, when the identification condition of the highlight portion for the third editing mode is satisfied, that is, when the passenger's emotion is activated and the passenger's sightline is oriented to the outside (arrows A3, A4), the management device 30 identifies the video, which is captured by the outside camera 11b capturing the video of the area on the left side of the vehicle corresponding to the passenger's sightline at this time, as a highlight portion #3 for constituting the third editing mode video. In such a period that the identification condition of the highlight portion for the third editing mode is satisfied, the other identification condition of the third editing mode is satisfied, that is, the like button is on (an arrow A5). That is, the periods in each of which the identification condition is satisfied overlap each other. Also, in the case where such an identification condition is satisfied that the like button is on, the video captured by the outside camera 11b that captures the video of the area on the left side of the vehicle corresponding to the passenger's sightline is identified as the highlight portion. Accordingly, in the case where the periods, in each of which the identification condition is satisfied, overlap each other and the camera to be applied for the highlight portion is the same at the time when each of the identification conditions is satisfied, the management device 30 collectively applies the single highlight portion.

Next, when the identification condition of the highlight portion for the second editing mode is satisfied, that is, when the sleek driving state of the driver continues for two seconds or longer (an arrow A6), the management device 30 identifies the video, which is captured by the outside camera 11b capturing the video of the area in front of the vehicle at this time, as a highlight portion #4 for constituting the second editing mode video. In such a period that the identification condition of the highlight portion for the second editing mode is satisfied, the identification condition of the highlight portion for the fourth editing mode is satisfied, that is, the passenger's emotion is activated and the conversation volume becomes "large" (an arrow A7). That is, the periods in each of which the identification condition is satisfied overlap each other. In the case where the identification condition of the highlight portion for the fourth editing mode is satisfied, that is, when the passenger's emotion is activated and the conversation volume becomes "large", instead of the video that is captured by the outside camera 11b, the video that is captured by the in-vehicle camera 11a is identified as the highlight portion. Accordingly, when the passenger's emotion is activated and the conversation volume becomes "large" (the arrow A7), the management device 30 identifies the video captured by the in-vehicle camera 11a at this time as a highlight portion #5 instead of the above highlight portion #4. Just as described, in the case where the camera to be applied for the highlight portion differs at the time when each of the identification conditions is satisfied, the management device 30 applies the videos captured by the different cameras as the highlight portions even when the periods, in each of which the identification condition is satisfied, overlap each other.

Next, when the identification condition of the highlight portion for the third editing mode is satisfied, that is, when the like button is on (an arrow A8), the management device 30 identifies the video, which is captured by the outside camera 11b capturing the video of the area in front of the vehicle at this time, as a highlight portion #6 for constituting the third editing mode video.

Next, Fig. 16 schematically illustrates a configuration of each of the first to fourth editing mode videos in the case where the highlight portions are identified by the video editing processing in Fig. 15. As illustrated in Fig. 16, the first editing mode video includes all of the plural highlight portions #1 to #6. The second editing mode video includes the highlight portions #1, #4, which are captured by the outside camera 11b at the time when the driver is in the sleek driving state, of the highlight portions #1 to #6. The third editing mode video includes the highlight portions #3, #6, which are captured by the outside camera 11b at the time when the emotion of the driver or the passenger is activated by the outside scenery, of the highlight portions #1 to #6. The fourth editing mode video includes the highlight portions #2, #5, which are captured by the in-vehicle camera 11a at the time when the emotion of the driver or the passenger is activated by the in-vehicle communication (that is, the in-vehicle conversation is animated), of the highlight portions #1 to #6.

In regard to each of the first to fourth editing mode videos, the management device 30 generates the video by aligning and connecting the plural highlight portions in a descending order of the start time. Here, in the first editing mode video, the period of the highlight portion #4 overlaps the period of the highlight portion #5 (see Fig. 15), that is, the start times of the highlight portions #4, #5 are the same. However, in this case, the management device 30 generates the video by sequentially aligning the highlight portion #4 and the highlight portion #5. For example, the management device 30 aligns the highlight portions with the same start time in an order of the area in front of the vehicle, the area on the right side of the vehicle, the area on the left side of the vehicle, the area behind the vehicle, and the inside of the vehicle. In regard to the highlight portions #4, #5, the management device 30 generates the video in which the highlight portion #4 is placed prior to the highlight portion #5.

Next, Fig. 17 schematically illustrates a configuration of the fifth editing mode video in the case where the highlight portions are identified by the video editing processing in Fig. 15. As illustrated in Fig. 17, the fifth editing mode video is a video in which chapters C1 to C6 are added at positions corresponding to beginning of the plural highlight portions #1 to #6 in the videos (five videos) of the plural outside cameras 11b and the in-vehicle camera 11a, so as to segment the videos.

As described above, the management device 30 first causes the mobile terminal 20 to show the first editing mode video, causes the user to select any of the second to fifth editing modes, thereafter generates any of the second to fifth editing mode videos according to the editing mode selected by the user, and causes the mobile terminal 20 to show the generated video. Here, the user can select the first editing mode. In such a case, the mobile terminal 20 only needs to show the first editing mode video that has already been generated.

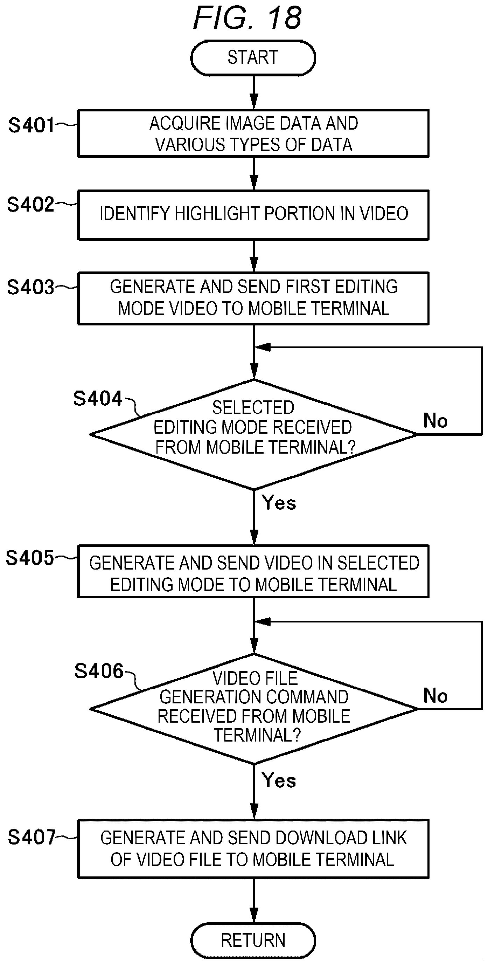

Next, a description will be made on an overall flow of the video editing processing (S111 in Fig. 2) according to this embodiment with reference to Fig. 18. Fig. 18 illustrates a processing flow of the video editing processing that is executed by the management device 30 in this embodiment. The management device 30 executes the video editing processing by using data that is acquired from the vehicle 1 when the trip mode is on (this data is sent from the vehicle 1 and stored in the input information database 31b of the management device 30). In addition, after the trip mode is off (more specifically, after the vehicle 1 arrives at the end point of the travel route and the IG signal is turned off), the management device 30 starts the video editing processing.

First, the management device 30 reads the image data of the imaging device 11, the measurement data of the sensor device 12, and the input data of the input device 15, which are sent from the vehicle 1, from the input information database 31b (S401). In this case, the management device 30 reads, from the input information database 31b, the data that is stored in connection with the drive identification number corresponding to a trip, the video editing processing of which should be executed. More specifically, the management device 30 acquires the video captured by each of the in-vehicle camera 11a and the plural outside cameras 11b, the passenger sightline information, the driving state information indicative of whether the driver is in the sleek driving state, the emotional information of the driver, the emotional information of the passenger, the conversation volume of the occupants, and the operation information of the like button.

Next, the management device 30 identifies the highlight portions in the videos that are captured by the in-vehicle camera 11a and the plural outside cameras 11b of the vehicle 1 (S402). In this case, the management device 30 applies the specified identification conditions for identifying the highlight portions that constitute the second to fourth editing mode videos from the videos captured by the plural cameras 11a, 11b. More specifically, the management device 30 (1) uses the condition that the sleek driving state of the driver continues for two seconds or longer as the identification condition of the highlight portion that constitutes the second editing mode video, (2) uses the condition that the driver operates the like button or the condition that the passenger's emotion is activated and the passenger's sightline is oriented to the outside as the identification condition of the highlight portion that constitutes the third editing mode video, and (3) uses the condition that the driver's emotion or the passenger's emotion is activated and the conversation volume is large as the identification condition of the highlight portion that constitutes the fourth editing mode video.

That is, in the case where it is determined on the basis of the driving state information that such an identification condition that the sleek driving state continues for two seconds or longer is satisfied, the management device 30 identifies the video, which is captured by the outside camera 11b capturing the video of the area in front of the vehicle at the time when this identification condition is satisfied, as the highlight portion constituting the second editing mode video. In addition, in the case where it is determined on the basis of the operation information of the like button, the passenger sightline information, and the emotional information of the passenger that such an identification condition that the driver operates the like button is satisfied or such an identification condition that the passenger's emotion is activated and the passenger's sightline is oriented to the outside is satisfied, the management device 30 identifies the video, which is captured by the outside camera 11b capturing the video in the direction corresponding to the passenger's sightline (the outside camera 11b capturing the video of the area in front of the vehicle in the case where the passenger's sightline cannot be identified) at the time when this identification condition is satisfied, as the highlight portion constituting the third editing mode video. Furthermore, in the case where it is determined on the basis of the emotional information of the driver, the emotional information of the passenger, and the conversation volume that such an identification condition that the driver's emotion or the passenger's emotion is activated and the conversation volume is large is satisfied, the management device 30 identifies the video, which is captured by the in-vehicle camera 11a at the time when this identification condition is satisfied, as the highlight portion constituting the fourth editing mode video.

In the case where the management device 30 identifies the plural highlight portions, just as described, for each of the plural highlight portions, the management device 30 stores: information used to identify the video by the camera that captures the highlight portion (one of the in-vehicle camera 11a and the plural outside cameras 11b); and information on start time of the highlight portion and end time of the highlight portion in this video.

Next, the management device 30 generates the first editing mode video (the highlight video) by aligning and connecting all the highlight portions that constitute the second to fourth editing mode videos identified as described above in the descending order of the start time, and sends data on this first editing mode video to the mobile terminal 20 (S403). The management device 30 stores the thus-generated first editing mode video in the content database of the browsing information database 31c. Thereafter, the mobile terminal 20 shows the first editing mode video that has been sent from the management device 30, and causes the user to select the editing mode for editing the video (for example, shows a screen for selecting the editing mode).

Next, the management device 30 determines whether the editing mode selected by the user has been received from the mobile terminal 20 (S404). If the management device 30 has received the editing mode selected by the user (S404: Yes), the management device 30 generates the video that corresponds to this editing mode, and sends data on this video to the mobile terminal 20 (S405). More specifically, in the case where any of the second to fourth editing modes is selected, the management device 30 extracts the highlight portions corresponding to the selected editing mode from the plural highlight portions that constitute the second to fourth editing mode videos identified as described above, aligns and connects these extracted highlight portions in the descending order of the start time, and thereby generates the highlight video (any of the second to fourth editing mode videos). Meanwhile, in the case where the fifth editing mode is selected, the management device 30 generates the fifth editing mode video (the chapter-added video) in which the chapter is added to the position corresponding to the beginning (defined by the start time of each of the highlight portions in the videos) of each of the plural highlight portions, which constitute the second to fourth editing mode videos identified as described above, in the videos captured by the in-vehicle camera 11a and the plural outside cameras 11b, so as to segment the videos. The management device 30 stores any of the thus-generated second to fifth editing mode videos in the content database of the browsing information database 31c.

Next, the management device 30 determines whether a video file generation command for downloading the video that corresponds to the editing mode selected by the user has been received from the mobile terminal 20 (S406). This video file generation command is issued when the user presses a download button shown on the mobile terminal 20. If receiving the video file generation command from the mobile terminal 20 (S406: Yes), the management device 30 generates a video file of the video that corresponds to the editing mode selected by the user, generates a download link of this video file, and sends this download link to the mobile terminal 20 (S407). The video file is stored in a download link destination in the content database. The mobile terminal 20 shows the download link that is sent from the management device 30.

The video file, which is generated in the management device 30 as described above, can be browsed not only by the user who generates this video file but also by another user by accessing a specified link using the mobile terminal 20. However, the video file of the certain user may be limited only for browsing by another user who is registered as the friend of such a user. In this case, the link to the video file may be shown on a profile screen as illustrated in Fig. 14(B), for example.

### [Album Creation Processing]

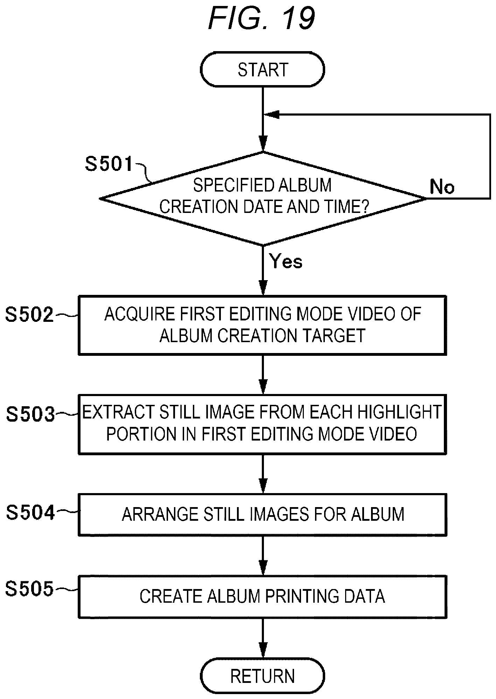

Next, a specific description will be made on the album creation processing (S112 in Fig. 2) according to the embodiment of the present invention with reference to Fig. 19. Fig. 19 illustrates a processing flow of the album creation processing that is executed by the management device 30 in this embodiment.

First, the management device 30 refers to the album creation date and time information that is stored in the content database in the browsing information database 31c, and determines whether current timing is timing to create the album (S501). That is, the management device 30 identifies a date and time when the album is created last time from the album creation date and time information, and determines whether a specified period (in other words, a cycle of creating the album (for example, one month)) has elapsed from the date and time.

If the current timing is the timing to create the album (S501: Yes), the management device 30 refers to the content database in the browsing information database 31c, and acquires the first editing mode video of an album creation target (S502). More specifically, the management device 30 extracts the one or more first editing mode videos that are generated from the videos captured during the drive in the on-state of the trip mode in a period from the last album creation date and time to the current date and time. This first editing mode video is generated by the above-described video editing processing (S403 in Fig. 18). In this case, the management device 30 refers to the route-related database in the browsing information database 31c, and uses the departure date and time linked to the travel route, so as to identify the travel route that has been set in the period from the last album creation date and time to the current date and time (corresponding to identification of the date and time when the trip mode is on in this period). Then, the management device 30 retrieves the video identification number and the video content identification number from the route identification number of the thus-identified travel route via the drive identification number, and thereby extracts the first editing mode video that has been generated in the above period.

Next, the management device 30 extracts the single still image from each of all the highlight portions that are included in the one or more first editing mode videos extracted as described above (S503). For example, for each of the highlight portions, the management device 30 randomly extracts the single still image from the plural still images (frames) that constitutes respective one of the highlight portions. As described above, the first editing mode video is the highlight video that includes both of the highlight portion in which the first degree of action (corresponding to the action from the "product" (the α cycle)) is relatively high and the highlight portion in which the second degree of action (corresponding to the action from the "person" (the β cycle)) is relatively high. Accordingly, by extracting the still image from each of all the highlight portions included in the first editing mode video, just as described, it is possible to acquire both of the still image in which the first degree of action is relatively high and the still image in which the second degree of action is relatively high. That is, it is possible to create an album including both of the still image in which the first degree of action is relatively high and the still image in which the second degree of action is relatively high.

Next, the management device 30 arranges the still images, which are extracted as described above, for the album (S504), and generates the printing data to create the album (S505). For example, the management device 30 generates the printing data in which approximately six still images are arranged per A4-size paper. Thereafter, printing is performed on the basis of the printing data and the album is created, and this created album is mailed to the user.

### [Operation and Effects]

Next, a description will be made on operation and effects of the experience acquisition support apparatus according to this embodiment.

In this embodiment, the management device 30 as the experience acquisition support apparatus sets the travel route of the vehicle 1 to be suggested to the user A. Then, while the user A is active in the on-state of the trip mode, to which this travel route is applied, the management device 30 notifies the mobile terminal 20 of the user A of the existence of the other user B and sends the information on the other user B to the mobile terminal 20 of the user A such that the user A can interact with the other user B when detecting the mobile terminal 20B that is owned by the other user B (here the user B and the mobile terminal 20B are representative examples) who is also active in the on-state of the trip mode and that exists within the specified range around the mobile terminal 20 of the user A. Then, the management device 30 generates the video file, which can be browsed by the other user B and the like, from the video captured by the imaging device 11 of the vehicle 1 in the on-state of the trip mode.

According to this embodiment, first, the travel route is suggested. In this way, as the action from the "product" (corresponding to the α cycle), the user A can fulfill curiosity, a desire for growth, and the like. In addition, according to this embodiment, the other user B browses the video file of the video that is captured during the movement of the vehicle 1. In this way, as the action from the "person" (corresponding to the β cycle), the user A can fulfill self-esteem needs by sharing the video, and the like. Meanwhile, according to this embodiment, the user A is notified of the existence of the other user B and the information on the other user B such that the user A can interact with the other user B who is located nearby. Thus, it is possible to promote the interaction between the user A and the user B who have various behavioral principles.

From what have been described so far, according to this embodiment, it is possible to promote the interaction between the user A and the user B who have the various behavioral principles while providing the user A with both of the action from the "product" and the action from the "person" through the drive by the vehicle 1. As a result, it is possible to foster two types of the behavioral principles of the user A that are pursuit of the action from the "product" and pursuit of the action from the "person" and to promote breadth of the experiences through the vehicle 1.

In this embodiment, per specified period, the management device 30 extracts the plural still images from the video captured during the movement of the vehicle 1 and generates the printing data for creating the album that includes these plural still images. In this way, by creating the album from the video captured in the vehicle 1 and fixing the past drive experience to a non-electronic medium, the user A can memorize the experiences that are acquired through the vehicle 1. As a result, it is possible to promote formation of the behavioral principle and a value through the vehicle 1.

In this embodiment, the management device 30 sets the travel route on the basis of the α evaluation value and the β evaluation value that are set for each of the point and the section. Thus, it is possible to set such a travel route that can provide the user with both of the action from the "product" and the action from the "person" that are inherent to the drive experience. That is, in a proposal of the travel route itself, the action from the "product" is high. However, since the travel route is set on the basis of the point and the section, each of which is set on the basis of the action from the "person", it is possible to adequately provide the user A with the action from the "person" through the proposal of the travel route.

In this embodiment, the management device 30 sets the travel route suited to the user A on the basis of the α evaluation value and the β evaluation value of the user A in addition to the α evaluation value and the β evaluation value of each of the point and the section. In this way, it is possible to set the travel route that corresponds to a characteristic of the user A related to likeliness of receiving the action from the "product" and the action from the "person".

In this embodiment, the management device 30 sets the α evaluation value and the β evaluation value of each of the points and each of the sections on the basis of the positional information, the driving state information, and the emotional state-related information related to the emotional states of the driver and the passenger, which are acquired from the plural vehicles 1. In this way, it is possible to adequately set the α evaluation value and the β evaluation value of each of the points and each of the sections.

In this embodiment, the management device 30 generates, as the video file, the highlight video including both of: the highlight portion that is identified from the video on the basis of the first degree of action (corresponding to the action from the "product" (the α cycle)) indicative of the influence of the element other than the interaction with the person on the experience of the user A; and the highlight portion that is identified from the video on the basis of the second degree of action (corresponding to the action from the "person" (the β cycle)) indicative of the influence of the interaction with the person on the experience of the user A. In regard to sharing of the video file with the other user B itself, the action from the "person" is high. However, by sharing the video file including the highlight portion that is extracted from a perspective of the action from the "product", the user can adequately receive the action from the "product" through sharing of the video file.

In this embodiment, the management device 30 extracts the plural still images from each of the highlight portion that is identified on the basis of the first degree of action and the highlight portion that is identified on the basis of the second degree of action, and generates the printing data for creating the album that includes these plural still images. Also, in this way, by creating the album from the video captured in the vehicle 1 and fixing the past drive experience to the non-electronic medium, the user A can memorize the experiences that are acquired through the vehicle 1. In particular, the user A can memorize the experiences corresponding to both of the action from the "product" and the action from the "person" that are inherent to the drive experience by the vehicle 1. As a result, it is possible to effectively foster two types of the behavioral principles of the user A that are the pursuit of the action from the "product" and the pursuit of the action from the "person".

In this embodiment, the management device 30 determines the first and second degrees of action on the basis of the driving state information and the emotional state-related information related to the emotional states of the driver and the passenger, which are acquired during the movement of the vehicle 1, and identifies the highlight portions from the videos captured by the plural cameras 11a, 11b on the basis of the each of the first and second degrees of action. In this way, it is possible to adequately identify portions related to the action from the "product" and the action from the "person" from the videos captured by the plural cameras 11a, 11b.

In this embodiment, the management device 30 sends the profile information of the other user B, which is shown on the mobile terminal 20 of the user A, to the mobile terminal 20 of the user A such that the user A can interact with the user B. In this way, the user A can know the further detailed information on the other user B, can thereby prepare topics for conversation with the user B, and can further foster willingness to become friends with the user B.

In this embodiment, the management device 30 sends the notification signal, which is used to notify of the approach of the mobile terminal 20B of the other user B, to the mobile terminal 20 of the user A according to the distance between the mobile terminal 20 of the user A and the mobile terminal 20B of the other user B such that the user A can interact with the other user B. In this way, the user A can meet the other user B in the real space with assistance of the notification by the mobile terminal 20.

### [Modified Examples]

In the embodiment described above, the travel route to be suggested to the user is set on the basis of the α evaluation value and the β evaluation value of each of the point and the section (the travel route setting processing). However, in another example, instead of setting the travel route, or in addition to setting of the travel route, the destination to be suggested to the user may be set on the basis of the α evaluation value and the β evaluation value of each of the point and the section. In a typical example, only the destination to be suggested to the user may be set on the basis of the α evaluation value and the β evaluation value of the point.

In the embodiment described above, the video file, which can be browsed by the other users, is generated from the video (the highlight video) that is generated by editing the video captured in the vehicle 1. However, the video file, which can be browsed by the other users, can be generated from the video captured in the vehicle 1 without editing this video.

In this embodiment described above, the embodiment in which the moving body is the vehicle such as a car has been described. However, the moving body is not limited to the vehicle being a car and includes a bus, a motorcycle, a scooter, a watercraft, and an aircraft.

### [Description of Reference Signs and Numerals]

- 1: vehicle (moving body)
- 3: management center
- 10: controller
- 11: imaging device
- 11a: in-vehicle camera
- 11b: outside camera
- 12: sensor device
- 14: display device
- 15: input device
- 20: mobile terminal
- 20d: input/output device
- 20e: display device
- 30: management device (experience acquisition support apparatus)
- A: user
- S: experience acquisition support system

## Claims

1. An experience acquisition support apparatus (30) for supporting acquisition of an experience through a moving body (1), the experience acquisition support apparatus configured to:
set a destination and/or a travel route of the moving body (1) to be suggested to a user (A);
while the user (A) is active in a trip state where the destination and/or the travel route is set for the moving body (1), notify a mobile terminal (20) of the user (A) of existence of another user (B) and send information on the other user (B) to the mobile terminal (20) of the user (A) such that the user (A) can interact with the other user (B) when detecting a mobile terminal that is owned by the other user (B) who is active in the trip state and that exists within a specified range around the mobile terminal (20) of the user (A); and
generate a video file that can be browsed by at least the other user (B) from a video captured by a camera (11a, 11b) in the moving body (1) in the trip state.

2. The experience acquisition support apparatus (30) according to claim 1 configured to:
per specified period, extract plural still images from the video and generate printing data for creating an album that includes said plural still images; and/or
refer to an album creation date and time information that is stored in a content database in a browsing information database (31c) of the experience acquisition support apparatus (30), and preferably determine whether current timing is timing to create the album, in particular determine whether the specified period has elapsed from the date and time.

3. The experience acquisition support apparatus (30) according to claim 1 or 2 configured to:
set the destination and/or the travel route on the basis of a first evaluation value (α), which is acquired by evaluating each of plural points and plural sections in map data from a perspective of an influence of an element other than an interaction with a person on the experience, and a second evaluation value (β), which is acquired by evaluating each of the plural points and the plural sections from a perspective of an influence of the interaction with the person on the experience.

4. The experience acquisition support apparatus (30) according to claim 3 configured to:
set the destination and/or the travel route suited to the user (A) on the basis of, in addition to the first and second evaluation values (α, β) of the point and the section, a third evaluation value (α) of the user (A), which is acquired by evaluating likeliness of receiving the influence of the element other than the interaction with the person on the experience, and a fourth evaluation value (β) of the user (A), which is acquired by evaluating likeliness of receiving the influence of the interaction with the person on the experience.

5. The experience acquisition support apparatus (30) according to claim 3 or 4 configured to:
set the first and second evaluation values (α, β) of the point and the section on the basis of positional information of the moving body (1), driving state information indicative of a driving state of the moving body (1) by a driver, and emotional state-related information that is related to an emotional state of the driver and/or a passenger of the moving body (1), which are acquired from each of plural moving bodies (1, 1B).

6. The experience acquisition support apparatus (30) according to claim 4 configured to:
for a user (A) whose third evaluation value (α) is higher than the fourth evaluation value (β), set a travel route that includes a point or a section with a relatively high second evaluation value (β), in particular a point or a section, for which a higher second evaluation value (β) than the fourth evaluation value of the user (β) is set; and
for a user (A) whose fourth evaluation value (β) is higher than the third evaluation value (α), set a travel route that includes a point or a section with a relatively high first evaluation value (α), in particular a point or a section, for which a higher first evaluation value (α) than the third evaluation value (α) of the user is set.

7. The experience acquisition support apparatus (30) according to any one of claims 1 to 6 configured to:
generate, as the video file, a highlight video including: a highlight portion (#1, #3, #4, #6) that is identified from the video on the basis of a first degree of action indicating the influence of the element other than the interaction with the person on the experience of the user; and a highlight portion (#2, #5) that is identified from the video on the basis of a second degree of action indicating the influence of the interaction with the person on the experience of the user.

8. The experience acquisition support apparatus (30) according to claims 2 and 7 configured to:
for each of the highlight portions, randomly extract a single still image from the plural still images that constitutes respective one of the highlight portions.

9. The experience acquisition support apparatus (30) according to claim 7 configured to:
in the highlight video, extract plural still images from each of the highlight portion (#1, #3, #4, #6) that is identified on the basis of the first degree of action and the highlight portion (#2, #5) that is identified on the basis of the second degree of action, and generate printing data for creating an album that includes said plural still images.

10. The experience acquisition support apparatus (30) according to claim 7 or 9,
the camera (11a, 11b) in the moving body (1) including plural cameras (11a, 11b) for capturing outside and inside of said moving body (1), the experience acquisition support apparatus (30) configured to:
determine the first and second degrees of action on the basis of the driving state information indicative of the driving state of the moving body (1) by the driver and the emotional state-related information related to the emotional state of the driver and/or the passenger of the moving body, which are acquired during movement of the moving body (1); and
identify the highlight portion (#1 to #6) from videos that are captured by the plural cameras (11a, 11b) on the basis of each of the determined first and second degrees of action.

11. The experience acquisition support apparatus (30) according to any one of claims 1 to 10 configured to:
as information on the other user, send profile information of the other user to be shown on the mobile terminal (20) of the user (A) to the mobile terminal (20) of the user (A) such that the user (A) can interact with the other user.

12. The experience acquisition support apparatus (30) according to any one of claims 1 to 11 configured to:
send a notification signal, which is used to notify of approach of the mobile terminal of the other user, to the mobile terminal (20) of the user (A) according to a distance between the mobile terminal (20) of the user (A) and the mobile terminal of the other user such that the user (A) can interact with the other user.

13. The experience acquisition support apparatus (30) according to any preceding claim configured to:
in the case where the mobile terminal of the other user (B) who is active in an on-state of a trip mode exists within a specified second range, in particular within 500 m, around the mobile terminal (20) of the user (A), cause the mobile terminal (20) of the user (A) to show the existence of the other user (B), and preferably execute user list display processing to cause the mobile terminal (20) of the user (A) to show a simple profile information of the other user (B).

14. The experience acquisition support apparatus (30) according to any preceding claim configured to:
in the case where the mobile terminal of the other user (B) who is active in an on-state of a trip mode exists within a specified third range, in particular within 10 to 50 m, around the mobile terminal (20) of the user (A), cause the mobile terminal (20) of the user (A) to show the existence of the other user (B), in particular notify of approach of the other user (B), so that the user (A) can approach the other user (B), and preferably execute interaction promotion processing to cause the mobile terminal (20) of the user (A) to show detailed profile information of the other user (B).

15. An experience acquisition support system (S) including:
an experience acquisition support apparatus (30) according to any preceding claim; and
a moving body (1);
wherein preferably, the moving body (1) is a vehicle (1), in particular a car, a bus, a motorcycle, a scooter, a watercraft, or an aircraft.
